# EUROPÄISCHE PATENTANMELDUNG

(11) **EP 4 571 115 A1**
(43) Veröffentlichungstag der Anmeldung: **18.06.2025**
(21) Anmeldenummer: 24218455.4
(22) Anmeldetag: 09.12.2024
(51) Int. Cl.: F04C 18/16, F04C 23/00, F04C 29/04

(54) **KOMPRESSOREINRICHTUNG MIT KÜHLUNG UND VERFAHREN ZUM BETREIBEN EINER KOMPRESSOREINRICHTUNG**

(30) Priorität: 13.12.2023 DE 102023135013
(71) Anmelder: Kaeser Kompressoren SE, 96450 Coburg (DE)
(72) Erfinder: Simross, Dirk, 96450 Coburg (DE)
(74) Vertreter: Eisenführ Speiser

(57) **Zusammenfassung**

Die Erfindung betrifft Kompressoreinrichtung mit einem Kompressor zum Verdichten eines Gases zum Erzeugen von Druckgas, insbesondere Druckluft, und einer Kühleinrichtung und die Kühleinrichtung umfasst einen Ölkühler zum Kühlen von durch den Kompressor erwärmten Öl, wenigstens einen Druckgaskühler zum Kühlen des ganz oder teilweise zum Druckgas verdichteten Gases, und wenigstens einen Gehäusekühler zum Kühlen eines Gehäuses oder eines Teils des Gehäuses des Kompressors, wobei der Ölkühler, der wenigstens eine Druckgaskühler und der wenigstens eine Gehäusekühler jeweils dazu vorbereitet sind, das Kühlen durch einen Kühlmittelstrom aus einem flüssigen Kühlmittel, insbesondere Wasser, zu erreichen und wobei für den Kühlmittelstrom des Ölkühlers, den Kühlmittelstrom wenigstens eines des wenigstens einen Druckgaskühlers und den Kühlmittelstrom wenigstens eines des wenigstens einen Gehäusekühlers jeweils ein individuelles, ansteuerbares Steuermittel vorgesehen ist, um jeden dieser Kühlmittelströme individuell zu steuern, sodass eine Kühlleistung jeweils für den Ölkühler, den wenigstens einen des wenigstens einen Druckgaskühlers und den wenigstens einen des wenigstens einen Gehäusekühlers individuell steuerbar ist.

## Beschreibung

Die vorliegende Erfindung betrifft eine Kompressoreinrichtung zum Verdichten eines Gases zum Erzeugen von Druckgas, insbesondere Druckluft, wobei die Kompressoreinrichtung eine Kühleinrichtung aufweist. Außerdem betrifft die vorliegende Erfindung ein Verfahren zum Betreiben eines Kompressoreinrichtung mit einer Kühleinrichtung.

Kompressoren zum Verdichten eines Gases zum Erzeugen von Druckgas können auch als Druckgaskompressoren bezeichnet werden. Sie dienen somit dazu, das Druckgas zu erzeugen, oft nämlich Druckluft. Diese Druckluft, oder anderes Druckgas, ist besonders für eine nachfolgende industrielle Verwendung vorgesehen. Nachfolgende Erläuterungen zu Druckluft betreffen sinngemäß auch andere Druckgase.

Funktionsbedingt entsteht bei dem Erzeugen von Druckluft Wärme. Sowohl die Druckluft als auch der Kompressor, insbesondere sein Gehäuse, werden erwärmt und müssen daher gekühlt werden. Zum Kühlen können Gehäusekühler zum Kühlen eines Gehäuses des Kompressors oder eines Teils davon vorgesehen sein, die oftmals auch als Mantelkühler bezeichnet bzw. ausgeführt sind. Bei ihnen kann ein Kühlmedium, das synonym auch als Kühlmittel bezeichnet werden kann, insbesondere Wasser, durch den Gehäusekühler strömen und dadurch das Gehäuse kühlen. Außerdem kann ein Druckgaskühler vorgesehen sein, der in einem Teil eines Leitungssystems angeordnet ist, das das Druckgas, insbesondere die Druckluft, führt. Hier kann besonders ein Wärmetauscher vorgesehen sein, durch den ebenfalls ein Kühlmedium bzw. Kühlmittel, insbesondere Wasser, fließt. Häufig wird beim Erzeugen des Druckgases auch Öl benötigt, insbesondere zum Schmieren der Komponenten des Kompressors. Solches Öl wird ebenfalls erwärmt und kann durch einen Ölkühler gekühlt werden, der insbesondere einen Wärmetauscher aufweisen kann. Durch diesen Wärmetauscher strömt ebenfalls ein Kühlmedium bzw. Kühlmittel, insbesondere Wasser.

Eine effiziente Kühlung kann dadurch erreicht werden, dass alle genannten Kühler, wobei von den genannten Kühlern jeweils auch mehrere vorgesehen sein können, an einen Primärkühlkreislauf angeschlossen sind. Besonders können die Kühlungen dazu ganz oder teilweise parallelgeschaltet sein, sodass möglichst nicht ein Kühler das bereits erwärmte Wasser eines vorigen Kühlers erhält, was in einer Reihenschaltung erfolgen würde.

Durch die Parallelschaltung erhalten die einzelnen Kühler ihren Kühlwasseranteil je nach Strömungswiderstand ihres Parallelzweiges. Durch entsprechende Auslegung dieser Parallelzweige bzw. der Kühler als solche erhalten die Kühler jeweils eine angemessene Menge an Kühlmittel, also insbesondere Wasser.

Es hat sich aber herausgestellt, dass der Kühlbedarf und damit der Bedarf an Kühlmittel, also Kühlwasser, schwanken kann. Um dem gerecht zu werden, kann der Durchfluss des Kühlmittels im Primärkreislauf entsprechend angepasst werden. Ist die Veränderung des Kühlmittelbedarfs bei den einzelnen Kühlern aber unterschiedlich, so kann es bei optimaler Kühlung in einem Kühler zu zu starker oder zu schwacher Kühlung in einem anderen Kühler kommen.

Um eine solche nicht optimale Kühlung anzupassen, können entsprechende Ventile vorgesehen und angepasst werden, mit denen der jeweilige Kühlmittelzufluss der einzelnen Kühlungen eingestellt werden kann. Eine solche Anpassung kann aber zeitaufwendig sein, weil dazu ein Monteur entsprechende Einstellungen vornehmen bzw. verändern muss. Das Ergebnis hängt auch von den individuellen Fähigkeiten des Monteurs ab.

Als weitere Verbesserung könnte eine individuelle Kühlung vorgesehen werden, bei der jeder Kühler einen eigenen Kühlkreislauf erhält. Eine solche Lösung ist allerdings aufwendig und daher nicht unbedingt zu empfehlen.

Aus dem Dokument WO 2022/163079 A1 ist eine Kühlung für Kompressoren bekannt, bei der u.a. die Menge der Kühlflüssigkeit angepasst werden kann.

Der vorliegenden Erfindung liegt somit die Aufgabe zugrunde, zumindest eines der vorstehend genannten Probleme zu adressieren. Insbesondere soll eine Lösung vorgeschlagen werden, bei der auf einfache Art und Weise eine angepasste Kühlung für eine Kompressoreinrichtung mit Kühleinrichtung geschaffen wird. Zumindest soll zu bisher bekannten Lösungen eine alternative Lösung vorgeschlagen werden.

Erfindungsgemäß wird eine Kompressoreinrichtung nach Anspruch 1 vorgeschlagen. Somit wird eine Kompressoreinrichtung mit einem Kompressor und einer Kühleinrichtung vorgesehen. Der Kompressor, der auch synonym als Druckgaskompressor bezeichnet werden kann, ist zum Verdichten eines Gases zum Erzeugen von Druckgas vorgesehen. Insbesondere wird ein Druckluftkompressor zum Erzeugen von Druckluft vorgeschlagen. Dieser erzeugt in im Grunde bekannter Art und Weise Druckgas bzw. Druckluft.

Außerdem ist eine Kühleinrichtung vorgesehen, die wenigstens einen Ölkühler, einen Druckgaskühler und einen Gehäusekühler aufweist. Der Ölkühler ist zum Kühlen von durch den Kompressor erwärmtem Öl vorgesehen. Das Öl kann dazu von dem Kompressor durch einen Wärmetauscher fließen, indem es seine Wärme an ein flüssiges Kühlmittel, insbesondere Wasser, also Kühlwasser, abgibt.

Der Druckgaskühler, von dem auch mehrere vorgesehen sein können, ist zum Kühlen des Druckgases vorgesehen. Das Druckgas strömt dazu durch diesen Druckgaskühler und gibt dabei Wärme an ein flüssiges Kühlmittel ab. Es kommt auch in Betracht, dass ein Kompressor mehrere Verdichtungsstufen aufweist, sodass das Gas nach der ersten Verdichtungsstufe auf einen ersten Drucklevel gebracht wird, was auch schon als Druckgas angesehen werden kann. Insoweit ist das Druckgas aber noch nicht auf den endgültigen Drucklevel komprimiert, sodass von einem teilweise verdichteten Gas ausgegangen werden kann. Aber auch für dieses teilweise verdichtete Gas, das wie gesagt vereinfacht auch als Druckgas bereits bezeichnet werden kann, kann ein Druckgaskühler vorgesehen sein, der in diesem Fall zwischen zwei Verdichterstufen angeordnet sein kann. Liegen wenigstens zwei Verdichterstufen vor, kann nach der zweiten Verdichterstufe wenigstens erneut ein Druckgaskühler vorgesehen sein, der das Druckgas kühlt, was von der genannten zweiten Verdichterstufe abgegeben wird.

Der Gehäusekühler, von dem auch mehrere vorgesehen sein können, ist zum Kühlen eines Gehäuses oder eines Teils des Gehäuses des Kompressors vorgesehen. Als Gehäuse des Kompressors kann hier im Grunde die gesamte körperliche Ausgestaltung des Kompressors, bzw. des Teils davon, angesehen werden. Es geht also nicht nur um ein Gehäuse im Sinne einer Abdeckung des Kompressors, sondern es geht um den Kompressor als körperlichen Gegenstand.

Zu diesen Kühlern wird somit vorgeschlagen, dass der Ölkühler, der wenigstens eine Druckgaskühler und der wenigstens eine Gehäusekühler jeweils dazu vorbereitet sind, das Kühlen durch einen Kühlmittelstrom aus einem flüssigen Kühlmittel, insbesondere Wasser, zu erreichen. Jeder dieser Kühler weist also wenigstens einen Strömungskanal auf, durch den das Kühlmittel strömen kann. Die genannten Kühler sind also prinzipbedingt Kühler, die zum Kühlen einen Kühlmittelstrom aus einem flüssigen Kühlmittel verwenden, also insbesondere Kühler, die mittels Wasser bzw. Kühlwasser gekühlt werden. Im Betrieb fließt somit durch jeden Kühler ein Kühlmittelstrom.

Besonders ist vorgesehen, dass für den Kühlmittelstrom des Ölkühlers, den Kühlmittelstrom wenigstens eines des wenigstens einen Druckgaskühlers und den Kühlmittelstrom wenigstens eines des wenigstens einen eines Gehäusekühlers jeweils ein individuelles, ansteuerbares Steuermittel vorgesehen ist um jeden Kühlmittelstrom individuell zu steuern, sodass eine Kühlleistung jeweils für den Ölkühler, den wenigstens einen des wenigstens einen Druckgaskühlers und den wenigstens einen des wenigstens einen Gehäusekühlers individuell steuerbar ist. Dass das Steuermittel ansteuerbar ist, bedeutet, dass es über eine Steuerung oder Regelung ansteuerbar ist, also nicht manuell. Es kann auch als automatisiert ansteuerbar bezeichnet werden. Damit das Steuermittel ansteuerbar ist, kann es bspw. einen Steuereingang aufweisen, über den es ein Steuersignal empfangen kann.

Es kommt auch in Betracht, dass bspw. einer der Kühler, z.B. der Druckgaskühler, zwei oder mehr Teilkühler aufweist, bzw. in zwei oder mehr Teilkühler unterteilt ist, z.B. in einen Zwischenkühler und einen Nachkühler, und beide Teilkühler jeweils über ein Steuermittel steuerbar sind. Für jeden der beiden oder mehreren Teilkühler ist somit ihr jeweiliger Kühlmittelstrom steuerbar. Die Teilkühler können dazu zueinander parallelgeschaltet sein. Das individuelle Steuern jeweils eines Kühlmittelstromes durch jeden der Teilkühler kann so ausgestaltet sein, dass zusätzlich, oder ausschließlich, die Verteilung eines Gesamtkühlmittelstroms auf die Teilkühler gesteuert wird.

Bspw. können zwei Gehäusekühler, die auch als Mantelkühler bezeichnet werden können, parallelgeschaltet sein, sodass ein Kühlmittelstrom auf diese beiden Gehäusekühler aufgeteilt wird, wobei für beide Gehäusekühler zusammen nur ein Steuermittel vorgesehen ist. Dieses Steuermittel steuert die Gehäusekühler und damit jeden einzelnen Gehäusekühler, bzw. den betreffenden Kühlmittelstrom, insoweit individuell, dass die Steuerung unabhängig zur Steuerung des Kühlmittels durch den Ölkühler und unabhängig zur Steuerung des Kühlmittelstroms durch den Druckgaskühler erfolgt.

Vorzugsweise wird ein Primärkühlkreislauf für alle Kühler vorgesehen, indem diese Kühler ganz oder teilweise in einer Parallelschaltung zueinander angeschlossen sind. Das schließt aber nicht aus, dass auch beispielsweise zwei Kühler, zum Beispiel zwei Gehäusekühler, die als Mantelkühler ausgestaltet sein können, in Reihe geschaltet sind. Solche zwei in Reihe geschalteten Mantelkühler können auch als ein gemeinsamer Gehäusekühler angesehen werden. Sind zwei oder mehr Teilkühler zueinander parallelgeschaltet, kommt in Betracht, dass sie im Primärkühlkreislauf zu den übrigen Kühlern, oder einigen davon, in Reihe geschaltet sind und dadurch den gesamten Kühlmittelstrom des Primärkühlkreislaufs erhalten, durch ihre Parallelschaltung zueinander aber dennoch individuell steuerbar sind.

In jedem Fall wird vorgeschlagen, trotz der Möglichkeit, weiterhin einen gemeinsamen Primärkühlkreis zu verwenden, aber eine individuelle Steuerbarkeit vorzusehen. So kann jedes individuelle Steuermittel als steuerbares Ventil ausgebildet sein, oder als steuerbare Pumpe, oder manche individuelle Steuermittel sind als steuerbares Ventil und andere als steuerbare Pumpe ausgebildet. Dadurch ist eine ständige Anpassung des Kühlmittelstroms jedes Kühlers möglich und dadurch kann jeder Kühler in einem für ihn optimalen Betriebspunkt betrieben werden. Es kann also jeder Kühler optimal betrieben werden. Entsteht beispielsweise ein erhöhter Kühlbedarf für den Ölkühler, kann sein Kühlmittelstrom erhöht werden, ohne dass der Kühlmittelstrom der übrigen Kühler auch erhöht wird.

Umgekehrt wurde erkannt, dass eine optimale Kühlung nicht unbedingt bedeutet, dass möglichst weit heruntergekühlt wird, sondern besonders von der Temperatur des Druckgases hängt auch seine Fähigkeit zur Abgabe oder Aufnahme von Feuchtigkeit ab. Wird ein Druckgas, insbesondere Druckluft, zu stark heruntergekühlt, kann es weniger Feuchtigkeit aufnehmen bzw. neigt zum Abgeben von Feuchtigkeit. Wenn dies unerwünscht ist, kann es durch entsprechende Kühlsteuerung verhindert oder andernfalls gefördert werden. Es kann also auch individuell die Kühlleistung eines Kühlers reduziert werden, während die Kühlleistung der übrigen Kühler gleichgehalten oder optimiert wird. Das kommt bspw. dann in Betracht, wenn der Kühlwasservolumenstrom begrenzt ist oder eine gewisse (Mindest-) Wasseraustrittstemperatur aus der gesamten Anlage gefordert wird.

Hier wurde besonders erkannt, dass die vorgeschlagene individuelle Steuerung dazu führt, dass sowohl der Ölkühler als auch der wenigstens eine Gehäusekühler und auch der wenigstens eine Druckgaskühler bzw. ihre Kühlmittelströme jeweils unabhängig voneinander gesteuert werden können. Damit ist eine optimale Kühlung für jeden Kühler möglich, was auch eine Minimierung der insgesamt erforderlichen Kühlleistung beinhalten kann. Hier ist zu beachten, dass bei Verwendung eines gemeinsamen Primärkühlkreislaufs der gemeinsame Kühlmittelstrom, also die Summe aller Kühlmittelströme der einzelnen Kühler, der somit auch als Summenkühlmittelstrom bezeichnet werden kann, zurückgekühlt werden muss. Erfolgt eine zu starke Kühlung in einem Kühler, führt das insgesamt zu mehr Wärmeeintrag in den Gesamtkühlmittelstrom bzw. Summenkühlmittelstrom und das kann dazu führen, dass der Rückkühler des Primärkühlkreislaufs mehr Wärme aus dem gemeinsamen Kühlmittelstrom entnehmen, also zurückkühlen muss.

Wichtig ist auch, dass ein Spalt zwischen Verdichtergehäuse und Rotoren in einem optimalen Bereich gehalten werden. Eine zu starke Kühlung des Gehäuses führt zu einer Verkleinerung und damit zu einem Kontakt zwischen Rotor und Gehäuse, wodurch sich der Spalt dauerhaft vergrößern würde. Bei zu geringer Kühlung des Gehäuses entsteht ein unnötig großer Spalt zwischen Rotor und Gehäuse, was zu internen Rückströmungen des bereits verdichteten Gases führen würde.

Relevant ist auch die Kühlung der Druckluft nach der letzten Verdichterstufe auf einen optimalen Wert. Bei zu geringer Kühlung kann es zu Schäden an Bauteilen kommen oder die Drucklufttrocknung funktioniert ggf. nicht ausreichend.

Für den Ölkühler ist relevant, dass über die Öltemperatur die Ölviskosität in einem möglichst optimalen Bereich gehalten wird. Bei zu kaltem Öl steigt die Leistungsaufnahme, bei zu warmem Öl steigt der Verschleiß.

Durch die vorgeschlagene Lösung kann somit auch die insgesamt benötigte Rückkühlung verringert werden. Relevanter sind oftmals aber geringere elektrische Leistungsaufnahme und optimale Druckluftaustrittstemperatur.

Oftmals ist eine hohe Temperatur im Gesamtkühlmittelstrom bzw. Summenkühlmittelstrom wünschenswert. Es soll dann so viel Wärme wie möglich dadurch ins Heizungswasser übertragen werden, das mit dem Gesamtkühlmittelstrom bzw. Summenkühlmittelstrom gekoppelt sein kann oder ihn verwenden kann, um z.B. Brennstoffkosten für die Heizung zu sparen. Hierfür muss jedoch das Temperaturniveau entsprechend angehoben werden, sodass das Kühlwasser für Heizzwecke genutzt werden kann, was für die Kühlung des Kompressors eher negativ sein kann, bei entsprechendem Wärmebedarf jedoch sinnvoll sein kann. Dadurch können auch Investitionskosten verringert werden.

Insbesondere ist vorgesehen, dass das individuelle Steuermittel zur nichtmanuellen Steuerung und/oder zur automatischen Steuerung und/oder zur Steuerung durch ein Steuerprogramm vorgesehen ist bzw. gesteuert wird.

Gemäß einem Aspekt wird vorgeschlagen, dass der Ölkühler, der wenigstens eine Druckgaskühler, zumindest einer davon, sollten mehrere vorhanden sein, und der wenigstens eine Gehäusekühler, zumindest einer davon, sollten mehrere vorhanden sein, an einen gemeinsamen Kühlmittelkreislauf, insbesondere Primärkühlkreislauf angeschlossen sind, insbesondere ganz oder teilweise in einer Parallelschaltung.

Vorteile dazu wurden bereits beschrieben. Es ist somit weiterhin möglich, nur einen gemeinsamen Kühlmittelkreislauf vorzusehen, sodass auch die Verwendung eines einzigen Rückkühlers möglich ist. Besonders relevant ist hier aber eine gemeinsame Wärmeabfuhr um möglichst vollständige Nutzung der Wärme zu ermöglichen. Dennoch wird die Möglichkeit der individuellen Steuerung der einzelnen Kühler geschaffen. Trotz gemeinsamen Kühlmittelkreislaufs ist also eine individuelle Ansteuerung der einzelnen genannten Kühler möglich.

Das hat besonders den Vorteil, dass bei der Verbesserung vorhandener Systeme und teilweise auch bereits vorhandener Infrastruktur, lediglich die individuellen Steuermittel zu den einzelnen Kühlern ergänzt werden müssen, sei es in der Planung oder in einer Nachrüstung. Das schließt natürlich nicht aus, dass nach einer solchen Optimierung oder zusammen mit einer solchen Optimierung auch Einsparungen am gemeinsamen Kühlmittelkreislauf vorgenommen werden können, wie die genannte geringere Auslegung oder Dimensionierung des Rückkühlers für den gemeinsamen Kühlmittelkreislauf bzw. für den Primärkühlkreislauf.

Gemäß einem Aspekt wird vorgeschlagen, dass der Kompressor mehrere Verdichtungsstufen aufweist und der wenigstens eine Druckgaskühler einen Zwischenkühler und einen Nachkühler aufweist. Der Zwischenkühler ist hierbei zwischen einer ersten und zweiten Verdichtungsstufe angeordnet und kühlt dort das teilweise zum Druckgas verdichtete Gas, also ein Druckgas, das noch nicht den in dem Gesamtsystem vorgesehenen maximalen Drucklevel erreicht hat. Zusätzlich ist der Nachkühler am Ausgang des Kompressors, also am Ausgang der letzten Verdichtungsstufe, vorgesehen. Bei zwei Verdichtungsstufen ist er also nach der zweiten Verdichtungsstufe vorgesehen. Dort kühlt er das Druckgas, das den Enddrucklevel des Druckgases aufweist, also den Drucklevel nach der zweiten Verdichtungsstufe. Besonders ist hier vorgesehen, dass der Zwischenkühler und der Nachkühler jeweils ein individuelles ansteuerbares Steuermittel aufweisen, oder ihnen zumindest jeweils eines zugeordnet ist. Dadurch können der Zwischenkühler und der Nachkühler ebenfalls jeweils individuell gesteuert werden. Auch sie können dazu zueinander und/oder zu den restlichen Kühlern parallelgeschaltet sein.

Gemäß einem Aspekt wird vorgeschlagen, dass die Steuermittel jeweils ein steuerbares Ventil und/oder eine steuerbare Pumpe aufweisen.

Durch das steuerbare Ventil ist auf einfache Art und Weise das Steuermittel realisierbar. Das steuerbare Ventil, was auch für alle Steuermittel gilt, kann zentral über eine Steuerung angesteuert werden, um so eine Gesamtsteuerung zu realisieren. Ein steuerbares Ventil benötigt nur minimale Steuerenergie und ist damit auch kostengünstig sowohl in der Anschaffung als auch im Betrieb. Durch die Drosselung der Ventile wird eine höhere Pumpenleistung benötigt, die dann wieder eingedrosselt wird. Für die Energiekosten der Wasserumwälzung können individuelle Pumpen sparsamer sein.

Ein Vorteil von Ventilen ist, dass sie dicht schließen. Das kann vorteilhaft sein, wenn mehrere Kompressoren an einem gemeinsamen Kühlsystem betrieben werden, aber nicht immer gleichzeitig alle Kompressoren laufen. Im Stillstand können die Ventile geschlossen werden, sodass es keine unnötige Durchströmung gibt.

Eine steuerbare Pumpe kann zwar aufwendiger als ein steuerbares Ventil sein, da sie insoweit ein aktives Bauelement ist, dadurch sind aber gute Steuerergebnisse erzielbar. Insbesondere hängt bei der Verwendung einer steuerbaren Pumpe der dadurch jeweils gesteuerte Kühlmittelstrom nicht oder nur in geringem Umfang von einem vorhandenen Gesamtkühlmittelstrom ab. Wenn alle individuellen Steuermittel als steuerbare Pumpe ausgebildet sind, kann auch eine Pumpe zum Pumpen des Gesamtkühlmittelstroms entbehrlich sein. Dennoch kann auch eine Kombination möglich sein, auch wenn es häufig vorteilhaft ist, sich auf eine Variante festzulegen.

Gemäß einem Aspekt wird vorgeschlagen, dass der wenigstens eine Gehäusekühler wenigstens einen Mantelkühler aufweist, insbesondere mit zwei in Reihe geschalteten Teilmantelkühlern, zum Kühlen jeweils einer Verdichterstufe, die dazu vorbereitet sind, zum Kühlen denselben Kühlmittelstrom zu verwenden und den Kühlmittelstrom mit demselben Steuermittel zu steuern.

Bei einem solchen Mantelkühler sind somit Mediumleitungen in einem Mantelbereich des Kompressors vorgesehen. Dadurch wird der Kompressor mit entsprechenden Kühlmittelströmen durchströmt und dadurch gekühlt.

Bei den vorgeschlagenen in Reihe geschalteten Teilmantelkühlern kann besonders ein Teilmantelkühler einen Mantel des Kompressors einer ersten Verdichtungsstufe kühlen und der zweite Teilmantelkühler eine zweite Verdichtungsstufe kühlen. In einer bevorzugten Ausgestaltung durchströmt das kühlere Wasser erst die 2. Stufe, da hier die Gehäusetemperatur und damit Gehäusegröße, besonders die Größe der Spalte sich stärker auf die Rückströmungen auswirkt. Es wurde also erkannt, dass durch die Geometrie des Kompressors es sinnvoll ist, dass die 2. Stufe zuerst durchströmt wird.

Durch die Reihenschaltung kann bei gleichem Kühlwasservolumenstrom für die Mantelkühlungen aufgrund der höheren Strömungsgeschwindigkeit ein besserer Wärmeübergang und damit eine bessere Kühlwirkung erzielt werden als bei einer Parallelschaltung.

Vorzugsweise bekommt die Mantelkühlung überproportional viel Kühlwasser, sodass die Vorwärmung des Kühlmittels in der 2. Stufe für die Stufe 1 nicht so stark ins Gewicht fällt.

Es ist hier sinnvoll, diese beiden Teilmantelkühler zusammengefasst als einen Mantelkühler und damit als einen Gehäusekühler zu betrachten und auch durch nur ein Steuermittel zu steuern.

Hier liegt auch die Erkenntnis zugrunde, dass zwei Verdichtungsstufen auch grundsätzlich ähnlich stark belastet werden und daher zusammen gesteuert werden können. Die Gleichschaltung und zusammengefasste Steuerung dieser beiden Mantelkühler für die beiden Verdichtungsstufen ist daher als zweckmäßig erkannt worden. Es wurde somit besonders erkannt, dass nicht jegliche individuelle Steuerung nur von Vorteil sein muss.

Gemäß einem Aspekt wird vorgeschlagen, dass eine gemeinsame Steuerungseinrichtung zum koordinierten Steuern der Kühlmittelströme vorgesehen ist, insbesondere, dass die gemeinsame Steuerungseinrichtung zum Steuern der Steuermittel vorbereitet und mit den Steuermitteln verbunden ist.

Dadurch kann erreicht werden, dass nicht nur die einzelnen Kühler für sich gut gesteuert werden, sondern, dass auch eine Koordination der Kühler untereinander erreicht werden kann und insbesondere ein Gesamtkühlkonzept erreicht werden kann. Hierbei wurde auch erkannt, dass besonders bei Verwendung eines gemeinsamen Rückkühlers für alle Kühler und/oder bei Verwendung eines gemeinsamen Primärkühlkreislaufs für alle Kühler das koordinierte Steuern der Kühlmittelströme zusätzlich ermöglicht, Anforderungen an oder durch den Rückkühler bzw. an oder durch den Primärkühlkreislauf mit zu berücksichtigen. So kann beispielsweise auch eine Temperatur im Rückkühler und/oder im Abfluss des gemeinsamen Primärkühlkreislaufs berücksichtigt und sogar geregelt werden.

Die gemeinsame Steuerungseinrichtung kann alle Steuermittel steuern und dazu mit diesen verbunden sein. Eine solche Verbindung betrifft besonders eine datentechnische Verbindung. Sie kann kabelgebunden sein, was häufig zweckmäßig ist, denn häufig sind sämtliche genannten Kühler örtlich nah beieinander. Gegebenenfalls könnten einige Elemente weiter entfernt sein, wie beispielsweise der Rückkühler, besonders dann, wenn er in einer Ausführungsform als Kühlturm vorgesehen ist. Auch dann könnte eine kabelgebundene Kommunikation und damit kabelgebundene Verbindung zwischen der gemeinsamen Steuereinrichtung und den Steuermitteln vorgesehen, es kommt aber auch eine kabellose Verbindung, insbesondere Funkverbindung, in Betracht.

Die gemeinsame Steuereinrichtung kann besonders dadurch zum Steuern der Steuermittel vorbereitet sein, dass sie Istwerte von den Steuermitteln empfängt und/oder Sollwerte an die Steuermittel überträgt. Vorzugsweise kann die Steuerungseinrichtung mit weiteren Sensoren verbunden sein, insbesondere mit Temperatursensoren, aber auch mit Feuchtigkeitssensoren, die zum Erfassen einer Feuchtigkeit der Druckluft bzw. des Druckgases vorgesehen sein können. Auch andere Eigenschaften des Druckgases können erfasst und zur weiteren Berücksichtigung an die gemeinsame Steuerungseinrichtung übertragen werden.

Die gemeinsame Steuerungseinrichtung kann zudem mit Steuermitteln verbunden sein, die beispielsweise den primären Kühlkreislauf steuern, nämlich insbesondere einen Durchfluss des primären Kühlkreislaufs. Es kommen auch weitere Steuerungsaufgaben in Betracht, beispielsweise eines weiteren oder sekundären gemeinsamen Kühlkreislaufs, sollte ein solcher vorgesehen sein.

Somit ist durch die gemeinsame Steuerungseinrichtung eine vollumfängliche Steuerung und damit die Umsetzung eines Gesamtkonzepts möglich, ohne dass ein hoher apparativer Aufbau erforderlich wäre. Besonders können die Steuermittel als steuerbare Ventile vorgesehen sein und benötigen dann lediglich Steuerbefehle von der gemeinsamen Steuerungseinrichtung. Eine solche Lösung schafft eine vollumfängliche Steuerungsmöglichkeit, während sie gleichzeitig nur einen geringen apparativen Aufbau erforderlich macht. Gleiches gilt auch, wenn eines oder mehrere der Steuermittel als Pumpen vorgesehen sind. Auch hier sind zwar diese Pumpen erforderlich, sie stellen aber insgesamt dennoch keinen hohen apparativen Aufwand dar und können auf einfache Art und Weise über die gemeinsame Steuerungseinrichtung angesteuert werden.

Insgesamt ist ein optimales Kühlergebnis fürdie gesamte Kompressoreinrichtung erzielbar. Dabei ist zu wiederholen, dass ein optimales Kühlergebnis nicht eine maximale Kühlung bedeutet, sondern ein optimales Kühlergebnis auch im Lichte des eingesetzten Aufwandes gesehen werden kann. Beispielsweise könnte ein Kompressor mit zwei Verdichterstufen vorgesehen sein und unter anderem ein Zwischenkühler und ein Nachkühler vorgesehen sein. Eine gewünschte Temperatur im fertigen Druckgas kann durch eine starke Kühlung des Nachkühlers und eine schwache Kühlung des Zwischenkühlers erreicht werden, oder umgekehrt.

Besonders wurde erkannt, dass es vorteilhaft ist, den Zwischenkühler und den Nachkühler gezielt unterschiedlich zu kühlen. Besonders auch dafür werden die individuell ansteuerbaren Steuermittel vorgeschlagen.

Besonders wurde erkannt, dass eine möglichst optimale Kühlung dadurch erreicht oder begünstigt werden kann, dass die Druckluft im Nachkühler nur stark wie nötig gekühlt wird, besonders so, dass ein ausreichender Drucktaupunkt erreicht werden kann und die Druckluft dabei so warm wie möglich, bzw. zulässig ist, dabei aber gleichzeitig die Druckluft im Zwischenkühler so stark wie möglich zu kühlen, da hierdurch die Antriebsleistung des Kompressors sinkt.

Die Gehäusetemperatur kann auch die Drucklufttemperatur beeinflussen, und auch die Drucklufttemperatur kann die Temperatur des Gehäuses beeinflussen. Beispielsweise wurde folgender Steuerzusammenhang erkannt. Durch eine gute Zwischenkühlung kann auch die Austrittstemperatur aus der 1. Verdichterstufe sinken. Es wurde nämlich erkannt, dass bei geringer Temperatur zwischen den Verdichterstufen dort auch der Zwischendruck sinkt und dadurch das Druckverhältnis der 1. Verdichterstufe sinkt, was zu einer geringeren Temperatur am Ausgang der 1. Verdichterstufe führen kann.

Zumindest die Kühlung der teilweise komprimierten Druckluft (oder ganz allgemein des Druckgases) kann sich auch auf die Gehäusetemperatur, insbesondere auch auf die Rotortemperatur zumindest der zweiten Verdichterstufe auswirken, durch die diese gekühlte teilkomprimierte Druckluft noch strömt.

Somit können letztendlich alle Kühltemperaturen sich gegenseitig beeinflussen und insbesondere zusammen das Gesamtkühlergebnis der Kompressoreinrichtung beeinflussen. Durch die gemeinsame Steuerungseinrichtung kann all dies koordiniert werden. Es ist dann ein optimales Druckgaserzeugnis erreichbar. Hierdurch kann auch die elektrische Leistungsaufnahme des Kompressors beeinflusst werden.

Hierdurch kann auch ein hohes Temperaturniveau am Wasseraustritt des Gesamtkühlmittelstroms bzw. Summenkühlmittelstroms erreicht werden, wodurch die Wärme weiter genutzt werden kann.

Gemäß einem Aspekt wird vorgeschlagen, dass der Kompressor ein trockenverdichtender Kompressor ist und/oder ein Schraubenverdichter ist. Der Schraubenverdichter ist ein solcher, der dazu ausgebildet ist, das Gas, insbesondere die zu komprimierende Luft, durch eine Bewegung zweier ineinandergreifender Schrauben zu verdichten. Dadurch kann besonders auch ein kontinuierlicher Verdichtungsprozess durchgeführt werden.

Bei dem trockenverdichtenden Kompressor, der auch als Schraubenverdichter ausgebildet sein kann, wird kein Öl für den Verdichtungsvorgang eingesetzt, insbesondere wird kein Öl in das Druckgas bzw. in das zum Druckgas zu komprimierende Gas eingespritzt. Es wurde erkannt, dass solche trockenverdichtenden Kompressoren sich stärker erwärmen können als andere, besonders weil die kühlende Wirkung des eingespritzten Öls entfällt. Anwendungsgebiete sind Bereiche, in denen ölfreie Druckluft erforderlich ist, z.B. in der Pharmaindustrie, Lebensmittelindustrie, Reinraumanwendungen, etc. Hier darf es zu keinerlei Kontamination der Druckluft mit Öl kommen. Solche Anwendungen können somit mit den vorgeschlagenen Lösungen dennoch gut gekühlt werden, ohne solche Kontaminationen zu riskieren. Daher wird besonders für solche trockenverdichtenden Kompressoren das gemäß dieser und jeglicher anderer Ausführungsformen genannte Konzept vorgeschlagen. Besonders kann durch das vorgeschlagene Kühlkonzept der Einsatzbereich eines trockenverdichtenden Kompressors erweitert werden. Besonders kann die elektrische Leistungsaufnahme des Kompressors reduziert werden. Es kann eine höhere Wasseraustrittstemperatur im Gesamtkühlmittelstrom erreicht werden, sodass die anfallende Abwärme besser genutzt werden kann.

Gemäß einem Aspekt wird vorgeschlagen, dass wenigstens ein weiterer oder zwei weitere Druckgaskühler vorgesehen sind, die bezogen auf eine Strömungsrichtung des Druckgases hinter dem Kompressor angeordnet sind, um das Druckgas dort weiter zu kühlen. Dazu wird vorgeschlagen, dass der wenigstens eine weitere bzw. die zwei oder noch mehr weiteren Druckgaskühler an denselben Primärkühlkreislauf wie wenigstens einer der bereits genannten Kühler angeschlossen ist, also wie der eine oder die mehreren Druckgaskühler und/oder der eine oder die mehreren Gehäusekühler und/oder der Ölkühler. Dadurch kann eine weitere Kühlung des Druckgases durchgeführt werden und durch die Verwendung dieser weiteren Druckgaskühler an demselben Primärkühlkreislauf kann eine gut verteilte Kühlung für das Druckgas erreicht werden, ohne dass ein hoher apparativer Aufwand erforderlich wäre.

Durch die weiteren Druckgaskühler ist es möglich, dass andere Wärmetauscher mit dem primären Kühlsystem, dabei z.B. mit Heizungswasser, auf höherem Niveau gekühlt werden. Es wurde erkannt, dass das sinnvoll sein kann, um das primäre Wassersystem auf höheren Temperaturen zu betreiben, um viel Wärme nutzen zu können, aber gleichzeitig sehr trockene und/oder kühle Druckluft zu erzeugen.

Hier ist besonders hervorzuheben, dass eine solche Verwendung von so vielen Druckgaskühlern erst durch die vorgeschlagene Steuerung der einzelnen Kühlmittelströme durch die Steuermittel ermöglicht wird, zumindest deutlich verbessert wird. Ohne solche individuellen Steuermittel für jeden der Druckgaskühler bestände die Gefahr, dass unnötig viel Kühlwasser durch die Wärmetauscher strömen könnte. Eine manuelle Einstellung müsste immer den ungünstigsten Fall, z.B. bei maximaler Leistung im Hochsommer, berücksichtigen. Dann bestände die Gefahr, dass die Druckluft meistens unnötig stark gekühlt wird. Dadurch sinkt der Betriebsvolumenstrom, sodass in vielen Anwendungen mehr Druckluft verbraucht werden würde.

Daher ist in jedem Fall vorgesehen, dass jeder Druckgaskühler, also auch die weiteren Druckgaskühler, jeweils einen Kühlmittelstrom verwenden, der jeweils durch ein eigenes individuelles Steuermittel gesteuert wird. Ein eigenes individuelles Steuermittel ist somit eines, das den entsprechenden Kühlmittelstrom steuert. Mit anderen Worten sind bei vier Druckgaskühlern auch vier Steuermittel vorgesehen, nämlich eines für jeden. Auch diese können über die gemeinsame Steuerungseinrichtung koordiniert gesteuert werden.

Außerdem oder alternativ ist vorgesehen, dass der wenigstens eine oder die mehreren weiteren Druckgaskühler an einen zweiten Mediumkühlkreislauf angeschlossen sind, der als Sekundärkühlkreislauf bezeichnet werden kann. Dieser Sekundärkühlkreislauf kann separat arbeiten oder mit dem Primärkühlkreislauf gekoppelt sein, insbesondere über einen Wärmetauscher.

Hierdurch kann auf einfache Art und Weise eine Ergänzung dieses einen oder dieser mehreren weiteren Druckgaskühler vorgenommen werden. Sie können ergänzt und über den eigenen Mediumkühlkreislauf, nämlich den zweiten Mediumkühlkreislauf, also den Sekundärkühlkreislauf, angesteuert werden. Über den Sekundärkühlkreislauf kann bei Bedarf mittels eines Wärmetauschers Wärme aus dem Primärkühlkreislauf abgeführt werden. Somit kann eine Eintrittstemperatur in den Primärkühlkreislauf reduziert werden, was zu einer besseren Kühlung und geringerer elektrischer Leistungsaufnahme führt. Gleichzeitig kann jedoch auch wesentlich weniger Abwärme genutzt werden. Der zweite Mediumkühlkreislauf kann als Sekundärkühlkreislauf bezeichnet werden. Ein solcher Sekundärkühlkreislauf kann somit zum Kühlen des Primärkühlkreislaufs vorgesehen sein und zusätzlich die genannten weiteren Druckgaskühler kühlen, also mit Kühlmittel versorgen. Dieser Sekundärkühlkreislauf hat dadurch eine Doppelfunktion.

Gemäß einem Aspekt wird vorgeschlagen, dass der Ölkühler, der wenigstens eine Druckgaskühler und/oder der wenigstens eine Gehäusekühler jeweils einen Wärmetauscher aufweisen oder als Wärmetauscher ausgebildet sind und dazu vorbereitet sind, dass der jeweilige Kühlmittelstrom durch das jeweilige Steuermittel als Kühlmittelstrom durch den jeweiligen Wärmetauscher gesteuert wird.

Besonders wird somit deutlich, dass im Falle der Verwendung eines Wärmetauschers, was für einen, mehrere oder alle der genannten Kühler in Betracht kommt, das Steuermittel jeweils den Durchfluss durch den jeweiligen Wärmetauscher steuert. Dadurch kann somit der Wärmetauscher gesteuert werden und dadurch die Kühlleistung des jeweiligen Kühlers.

Gemäß einem Aspekt wird vorgeschlagen, dass die Kompressoreinrichtung, insbesondere die Kühleinrichtung, dazu vorbereitet ist, Kühlmittelströme individuell jeweils in Abhängigkeit von einer Temperatur zu steuern. Die Vorbereitung der Kompressoreinrichtung bzw. Kühleinrichtung kann besonders darin bestehen, dass entsprechende Temperatursensoren vorgesehen sind und ein entsprechender Steueralgorithmus vorgesehen ist. Insbesondere kann die gemeinsame Steuerungseinrichtung mit entsprechenden Temperatursensoren verbunden sein, um dadurch Temperaturwerte von den Temperatursensoren zu empfangen. Auf der gemeinsamen Steuerungseinrichtung kann eine entsprechende Steuerung, insbesondere ein entsprechendes Steuerungsprogramm, implementiert sein, das in Abhängigkeit von einem oder mehreren empfangenen Temperatursignalen wenigstens einen Steuerbefehl zur Abgabe an jeweils ein Steuermittel gibt, bzw. dazu vorbereitet ist.

Jeweils ein Kühlmittelstrom kann durch ein Steuermittel gesteuert werden und das Steuermittel kann einen entsprechenden Steuerbefehl empfangen. Der Steuerbefehl kann, durch die erwähnte Steuerung, in Abhängigkeit von wenigstens einem Temperaturwert erstellt werden.

Insbesondere wird vorgeschlagen, dass die Steuerung in Abhängigkeit von wenigstens einer Temperatur aus der Liste mit den folgenden Temperaturen erfolgt:
- eine Öltemperatur, insbesondere des durch den Kompressor erwärmten Öls,
- eine Druckgas-Temperatur,
- eine Manteltemperatur eines Kühlmittels, das einen Gehäusemantel des Kompressors durchströmt,
- eine Temperatur des Kühlmittels,
- eine Öleintrittstemperatur als Temperatur des in den Ölkühler eintretenden Öls
- eine Nachkühler-Gasaustrittstemperatur als Temperatur des aus einem bzw. dem Nachkühler austretenden Druckgases,
- eine Zwischenkühler-Gasaustrittstemperatur als Temperatur des aus einem bzw. dem Zwischenkühler austretenden Druckgases,
- eine Zwischenkühler-Kühlmittelaustrittstemperatur als Temperatur des aus dem Zwischenkühler austretenden Kühlmittels
- eine Nachkühler-Kühlmittelaustrittstemperatur als Temperatur des aus dem Nachkühler austretenden Kühlmittels,
- eine Mantelkühler-Kühlmittelaustrittstemperatur als Temperatur des aus einer bzw. der Mantelkühlung austretenden Kühlmittels,
- jeweils eine Gas- oder Kühlmittelaustrittstemperatur als Temperatur eines aus wenigstens einem Wärmetauscher austretenden Druckgases oder austretenden Kühlmittels, und
- eine Kompressor-Gasaustrittstemperatur als Temperatur aus einer Verdichterstufe des Kompressors und/oder dem Kompressor und/oder aus der Kompressoreinrichtung austretenden Druckgases.

Insbesondere ist jeweils vorgesehen, dass die jeweilige Temperatur mit einer Sensorik gemessen wird. Dadurch wird eine automatisierte Verarbeitung und Berücksichtigung der Temperatur möglich.

Eine Öltemperatur ist somit eine Temperatur des durch den Kompressor erwärmten Öls. Ein solches Öl kann in dem Kompressor besonders als Schmiermittel verwendet werden und es erwärmt sich durch den Betrieb des Kompressors. Es wurde erkannt, dass eine temperaturabhängige Kühlsteuerung entsprechend das Regeln der Temperatur des Öls ermöglicht und dadurch nicht nur eine gute Kühlung gewährleistet werden kann, sondern auch vermieden wird, dass das Öl zu stark gekühlt wird. Die Temperatur des Öls hat auch einen Einfluss auf seine Viskosität, sodass ein zu kaltes Öl nicht unbedingt wünschenswert ist. Diese Temperaturregelung des Öls des Kompressors, was auch vereinfachend als Kompressoröl bezeichnet werden kann, ist dabei durch die vorgeschlagenen Steuermittel auf einfache Art und Weise umsetzbar.

Ebenfalls kann die Steuerung in Abhängigkeit von einer Druckgastemperatur erfolgen, also von einer Temperatur des Druckgases, insbesondere der Druckluft. Dadurch kann somit auch die Druckgastemperatur gesteuert werden. Hier wurde besonders erkannt, dass Druckgas nicht zu heiß sein soll, wofür die Kühlung vorgesehen ist, das Druckgas aber auch nicht zu kalt sein soll.

Eine Manteltemperatur eines Kühlmittels, das einen Gehäusemantel des Kompressors durchströmt, gibt auch eine Information über das erreichte Kühlen des Kompressors. Die Messung kann direkt innerhalb des Gehäuses erfolgen, das muss sie aber nicht. Die Messung erfolgt typischerweise am Austritt, bzw. außerhalb des Gehäuses an höher gelegener Stelle. Jedenfalls kann die Manteltemperatur des Kühlmittels eine gute Information über die Gesamttemperatur des Kompressors geben, ist also nicht auf eine punktuelle Temperatur an einem konkreten Messpunkt im Kompressor beschränkt.

Eine Temperatur des Kühlmittels kann ganz generell auch an unterschiedlichen Stellen aufgenommen werden. Sie kann eine Information überdie Kühlwirkung des jeweiligen Kühlers geben, zu dem sie gehört. Insbesondere ist hier die Temperatur eines Kühlmittels nach dem Austritt aus dem jeweiligen Kühler zu verwenden, um die Kühlleistung und/oder die Temperatur in dem jeweiligen Kühler zu beurteilen.

Außerdem oder alternativ kann auch die Temperatur des Kühlmittels vor dem Einströmen in den Kühler verwendet werden. Besonders vorteilhaft wird eine Differenz zwischen eintretender und austretender Temperatur des Kühlmittels eines Kühlers verwendet, wobei daraus die Kühlleistung des Kühlers abgeleitet werden kann.

Eine Öleintrittstemperatur als Temperatur des in den Ölkühler eintretenden Öls kann vorteilhafterweise berücksichtigt werden, um dadurch den Kühlmittelstrom zu steuern. Ist die Öleintrittstemperatur sehr niedrig, kann ein geringerer Kühlmittelstrom ausreichend sein, oder gar kein Kühlmittelstrom vorgesehen sein, anderenfalls kann ein höherer Kühlmittelstrom sinnvoll sein. Die optimale Öltemperatur kann von verschiedenen Faktoren abhängig sein, z.B. von einer Verdichterdrehzahl und von der verwendeten Ölsorte. Bei drehzahlgeregelten Kompressoren kann sich die optimale Öltemperatur im Betrieb mit der aktuellen Drehzahl laufend etwas ändern. Es wurde erkannt, dass all dies durch die vorgeschlagenen Lösungen, besonders durch die Berücksichtigung der Öltemperatur, berücksichtigt werden kann.

Eine Nachkühler-Gasaustrittstemperatur ist eine Temperatur des aus dem Nachkühler austretenden Druckgases. Sie gibt eine Information darüber an, wie gut der Nachkühler das Druckgas kühlen konnte. Besonders kann ein Kühlmittelstrom durch den Nachkühler erhöht werden, wenn die Nachkühler-Gasaustrittstemperatur zu hoch ist, insbesondere, wenn er zu hoch für nachfolgende Komponenten oder Prozesse ist. Jedenfalls wird vorgeschlagen, den Kühlmittelstrom durch den Nachkühler in Abhängigkeit von der Nachkühler-Gasaustrittstemperatur zu steuern bzw. zu regeln.

Die Zwischenkühler-Gasaustrittstemperatur bezeichnet die Temperatur des aus dem Zwischenkühler austretenden Druckgases. Hiermit kann das Kühlergebnis des Zwischenkühlers erfasst werden. Besonders wird vorgeschlagen, dass der Kühlmittelstrom durch den Zwischenkühler in Abhängigkeit von der Zwischenkühler-Gasaustrittstemperatur gesteuert wird.

Eine Zwischenkühler-Kühlmittelaustrittstemperatur ist eine Temperatur, die die Temperatur des Kühlmittels am Austritt des Zwischenkühlers bezeichnet. Besonders wird vorgeschlagen, den Kühlmittelstrom durch den Zwischenkühler in Abhängigkeit von der Zwischenkühler-Kühlmittelaustrittstemperatur zu steuern. Besonders wird vorgeschlagen, den Kühlmittelstrom des Zwischenkühlers zu verringern, wenn sich die Zwischenkühler-Kühlmittelaustrittstemperatur verringert. Hier wurde besonders erkannt, dass bei geringer Zwischenkühler-Kühlmittelaustrittstemperatur das Kühlmittel im Zwischenkühler nicht genügend Wärme aufgenommen hat und daher quasi zu schnell durch den Zwischenkühler geströmt ist. Daher kann der Kühlmittelstrom verringert werden.

Ganz ähnlich verhält es sich bei der Nachkühler-Kühlmittelaustrittstemperatur, die eine Temperatur des aus dem Nachkühler austretenden Kühlmittels bezeichnet. Auch hier wird vorgeschlagen, den Kühlmittelstrom durch den Nachkühler in Abhängigkeit von der Nachkühler-Kühlmittelaustrittstemperatur zu steuern. Vorzugsweise wird der Kühlmittelstrom durch den Nachkühler in Abhängigkeit von der Gasaustrittstemperatur aus dem Nachkühler geregelt.

Eine Mantelkühler-Kühlmittelaustrittstemperatur beschreibt eine Temperatur des aus dem Mantelkühler austretenden Kühlmittels. Auch hier wird vorzugsweise ein Kühlmittelstrom durch den Mantelkühler in Abhängigkeit von der Mantelkühler-Kühlmittelaustrittstemperatur gesteuert. Je geringer die Mantelkühler-Kühlmittelaustrittstemperatur ist, umso weniger Wärmeenergie hat sie pro durchströmtem Volumen aus dem Kompressor aufgenommen und das ist ein Hinweis darauf, dass der Kühlmittelstrom zu hoch war.

Es wird auch vorgeschlagen, jeweils eine Gas- oder Kühlmittelaustrittstemperatur zu berücksichtigen und in Abhängigkeit von ihr zu steuern. Die Gasaustrittstemperatur ist eine Temperatur des aus einem Wärmetauscher austretenden Druckgases. Die Kühlmittelaustrittstemperatur ist eine Temperatur des aus wenigstens einem Wärmetauscher austretenden Kühlmittels. In beiden Fällen kann über die entsprechende Temperatur das Ergebnis des Wärmetauschers bewertet werden. Bei hoher Gasaustrittstemperatur aus dem Wärmetauscher ist von einer geringen Kühlung durch den Wärmetauscher auszugehen. Bei einer geringen Erhöhung der Kühlmitteltemperatur, was unter Berücksichtigung einer Kühlmitteleintrittstemperatur an eine Kühlmittelaustrittstemperatur abgelesen werden kann, ist anzunehmen, dass eine Verweildauer des Kühlmittels in dem Wärmetauscher zu kurz war, zumindest verlängert werden könnte, oder in anderen Worten, dass der Kühlmittelvolumenstrom durch den Wärmetauscher zu hoch oder unnötig hoch war und ggf. reduziert oder gedrosselt werden könnte.

Besonders vorteilhaft ist es, die Gasaustrittstemperatur und die Kühlmittelaustrittstemperatur jeweils eines Wärmetauschers gemeinsam zu berücksichtigen. Ist die Gasaustrittstemperatur gering, oder ist die Gasaustrittstemperatur nur geringfügig über der Kühlmitteleintrittstemperatur des jeweiligen Wärmetauschers, liegt ein gutes Kühlergebnis vor. Ist dabei gleichzeitig die Kühlmittelaustrittstemperatur auch gering, lässt sich daraus ableiten, dass die Kühlung des Druckgases durch den Wärmetauscher auch mit einem geringeren Kühlmittelstrom erzielt werden kann. Besonders zur absoluten Bewertung wird vorgeschlagen, die Sollwerte mit den Istwerten zu vergleichen. Ist aber die Gasaustrittstemperatur hoch, insbesondere höher als ein entsprechender Sollwert, muss möglicherweise der Kühlmittelstrom dennoch erhöht werden, selbst wenn die Kühlmittelaustrittstemperatur bereits gering ist. Ist die Gasaustrittstemperatur hoch und die Kühlmittelaustrittstemperatur hoch, so kann auf eine schlechte Kühlung geschlossen werden und die ließe sich dann durch eine Erhöhung des Kühlmittelstroms verbessern, denn in diesem Fall lässt die hohe Kühlmittelaustrittstemperatur auf eine zu hohe Verweildauer des Kühlmittels in dem Wärmetauscher schließen. In diesem Fall kann der Kühlmittelstrom erhöht werden.

Eine Kompressor-Gasaustrittstemperatur ist eine Temperatur eines aus einer Verdichterstufe des Kompressors austretenden Druckgases. Sie kann das aus der Kompressoreinrichtung austretende Druckgas bezeichnen. Ganz generell wurde erkannt, dass die Kompressor-Gasaustrittstemperatur verwendet werden kann, um davon abhängig einen Kühlmittelstrom einzustellen. Ist diese Temperatur hoch, kann die Erhöhung des Kühlmittelstroms sinnvoll sein, jeweils durch die betreffende Verdichterstufe, an der die Kompressor-Gasaustrittstemperatur hoch ist. Hier kommt unter anderem in Betracht, einen Kühlmittelstrom durch einen entsprechenden Mantelkühler der betreffenden Verdichterstufe zu erhöhen, ist die Kompressor-Gasaustrittstemperatur dort entsprechend hoch.

Es kommen aber auch andere Überlegungen in Betracht. Verdichtungsendtemperaturen hängen primär vom jeweiligen Druckverhältnis ab. Zudem haben die Drehzahl und der Stufenzustand entscheidenden Einfluss.

Auch eine Zwischenkühlung kann entscheidenden Einfluss haben, sowohl auf die nachgelagerte Stufe, als auch auf die vorgelagerte Stufe. Es wird vorgeschlagen, zu versuchen, die Mantelkühlung langfristig optimal zu kühlen. Das kann bedeuten, dass die Mantelkühlung ganzjährig auf ähnlicher Temperatur gehalten wird. Wenn die Mantelkühlung im Winter besser gekühlt werden würde, hätte dies nur einen kleinen Vorteil, der durch eine schlechtere Kühlung, und damit größeren Spalt und mehr Rückströmung, im Sommer überkompensiert werden würde. Eine Kühlkreislauf-Kühlmittelaustrittstemperatur ist eine Temperatur des Kühlmittels an einem Austritt aus einem Primär- und/oder Sekundärkreislauf. An dieser Temperatur lässt sich im Grunde die Wärmeaufnahme aller an diesen Primär- bzw. Sekundärkühlkreislauf angeschlossenen Kühler als kumulatives Ergebnis ablesen. Ist die Kühlkreislauf-Kühlmittelaustrittstemperatur hoch, kann es sinnvoll sein, einen entsprechenden Rückkühler so anzusteuern, dass er seine Kühlleistung erhöht. Es kommt auch in Betracht, einen Gesamtkühlmittelstrom durch den Primär- bzw. Sekundärkühlkreislauf zu beeinflussen, insbesondere einen solchen gemeinsamen Kühlmittelstrom umso höher einzustellen, je höher die Kühlkreislauf-Kühlmittelaustrittstemperatur ist.

Somit kann besonders die Kühlmittelaustrittstemperatur auf einen gewünschten Wert geregelt werden. Der gewünschte Wert für die Kühlmittelaustrittstemperatur kann so gewählt werden, dass der Betrieb möglichst effizient läuft. Das kann bedeuten, dass wenig Kühlwasser verbraucht wird, z.B. im Falle einer Frischwasserkühlung, oder eine vorgegebene Einleitungstemperatur, z.B. in sogenannte Schluckbrunnen oder Flüsse, eingehalten wird, oder die Temperatur zur Optimierung eines Kühlturms angepasst wird. Oft ist auch eine hohe Kühlmittelaustrittstemperatur gewünscht, um ein nutzbares Temperaturniveau zu erreichen, d.h. um die Abwärme für andere Prozesse, z.B. für eine Heizung, Adsorptionskälte, Trocknungsprozesse, Speisewasservorerwärmung, etc. nutzen zu können.

Besonders kann die Kühlmittelerwärmung auf einen bestimmten Wert geregelt werden.

Besonders wird vorgeschlagen, nicht nur eine der genannten Temperaturen zu berücksichtigen, sondern mehrere solcher Temperaturen. Insbesondere wird wenigstens eine Temperatur je eingesetztem Kühler berücksichtigt. Vorzugsweise werden Temperaturen an jedem Kühler erfasst und ausgewertet, um davon abhängig die Kühlmittelströme zu steuern. Weisen beispielsweise sämtliche Kühlmittelströme eine zu hohe Temperatur auf, so kann es zweckmäßig sein, den Gesamtkühlmittelstrom zu erhöhen. Sind nur einzelne Temperaturen hoch, beispielsweise von dem Kühlmittelstrom eines Kühlers, wohingegen die Temperatur des Kühlmittelstroms eines anderen Kühlers, jeweils am Austritt, gering ist, ist eher von einer ungleichmäßigen Kühlung zwischen den betrachteten Kühlern auszugehen. Dann kann der Kühlmittelstrom erhöht werden, dessen Temperatur hoch ist, um ein anschauliches Beispiel zu nennen. Gemäß einem weiteren Beispiel kann der gesamte Kühlmittelstrom limitiert sein, bzw. eine vorbestimmte Wasseraustrittstemperatur vorgegeben werden. In solchen Fällen wird vorgeschlagen, nicht lediglich nur den Kühlmittelstrom durch einen Kühler zu erhöhen, sondern gleichzeitig den Kühlmittelstrom durch einen anderen Kühler zu reduzieren, um eine gemischte Gesamtaustrittstemperatur konstant zu halten.

Jedenfalls wird vorgeschlagen, ein Steuern wenigstens in Abhängigkeit von einer der genannten Temperaturen durchzuführen. Insbesondere wird vorgeschlagen, mehrere dieser Temperaturen zu berücksichtigen und insbesondere wird vorgeschlagen, wenigstens einen Kühlmittelstrom oder einen Gesamtkühlmittelstrom in Abhängigkeit von mehreren der genannten Temperaturen zu steuern, insbesondere in Abhängigkeit von zwei, drei, vier, fünf oder noch mehr der genannten Temperaturen. Hierzu kann besonders die gemeinsame Steuerungseinrichtung verwendet werden.

Gemäß einem Aspekt wird vorgeschlagen, dass die Kompressoreinrichtung dazu vorbereitet ist, dass wenigstens ein Kühlmittelstrom in Abhängigkeit von einem Drucktaupunkt des Druckgases gesteuert wird. Insbesondere wird dazu der Drucktaupunkt mit einer Sensorik gemessen, sodass er zur weiteren Verarbeitung in einer Steuerung verwendet werden kann. Hier wurde besonders erkannt, dass hierdurch die Feuchtigkeitsaufnahme des Druckgases gesteuert werden kann. Kühlt das Druckgas, insbesondere die Druckluft, unter ihren Drucktaupunkt ab, so kann Feuchtigkeit kondensieren, was unerwünscht sein kann, es kann aber auch gezielt so gesteuert werden, dass der Drucktaupunkt erreicht wird. Gemäß einer Ausgestaltung wird die Kühleinrichtung, insbesondere ein, mehrere oder alle Kühlmittelströme, so gesteuert, dass das Druckgas nicht unter seinen Drucktaupunkt abkühlt, um dadurch ein Auskondensieren von Feuchtigkeit aus dem Druckgas, insbesondere aus der Druckluft, zu vermeiden.

Gemäß einer anderen, bevorzugten Ausgestaltung wird vorgeschlagen, dass das Druckgas so weit abgekühlt wird, dass ein nachgeschalteter Trockner den gewünschten Taupunkt erreicht bzw. gering unterschreitet, z.B. um 1 bis 5 Kelvin. Das wird aus folgendem Grund vorgeschlagen.

Das Druckgas wird vor dem Eintritt in den Trockner so stark wie nötig gekühlt, um den gewünschten Taupunkt zu erreichen, aber auch nicht unnötig mehr. Ziel dabei ist, dass die Druckluft nach dem Trockner eine möglichst optimale Temperatur hat, d.h. möglichst warm, aber nicht zu warm ist und ausreichend trocken ist.

Darüber hinaus kann der zur Verfügung stehende Kühlmittelvolumenstrom so aufgeteilt werden, dass die gesamte spezifische Leistungsaufnahme minimiert wird. Das bedeutet, dass die Leistungsaufnahme wenigstens von Kompressor, Trockner und Kühlsystem bezogen auf den erzeugten Druckgasvolumenstrom, oder einen Druckgasmassenstrom, minimal wird.

Eine solche Steuerung in Abhängigkeit von dem Drucktaupunkt wird besonders dann vorgeschlagen, wenn eine Trocknungseinrichtung vorhanden ist. In diesem Fall wird die Kühleinrichtung so gesteuert, dass die Temperatur des Druckgases so abfällt, dass der Drucktaupunkt erreicht oder vor Eintritt des Druckgases in die Trocknungseinrichtung fast erreicht wird.

Zur Verdeutlichung soll folgendes Bespiel dienen, dem ein Adsorptionstrockner zu Grunde liegt. Demnach kann ein Drucktaupunkt von unter -20°C gefordert sein. Diesen Wert schafft der Trockner nur bei einer Eintrittstemperatur der Druckluft von unter +50°C, wobei zu erwähnen ist, dass dieser Wert auch vom Druck und der Regenerationstemperatur und weiteren Größen abhängen kann. Somit wird die Druckluft von z.B. 200°C auf 50°C abgekühlt, sodass hier auch das Kondensat ausfällt und möglichst vollständig abgeschieden wird. Danach kann eine relative Feuchtigkeit von 100% vorliegen und somit ein Drucktaupunkt von 50°C. Hiermit schafft der Trockner einen Drucktaupunkt von -20°C.

Wenn stärker gekühlt wird, z.B. auf 30°C, dann erreicht der Trockner einen Drucktaupunkt von z.B. -35°C. Der Energieverbrauch des Trockners sinkt dabei nur geringfügig. Daher kann es effizienter sein, etwas mehr Kühlwasser für die Zwischenkühlung und die Mantelkühlung zu verwenden, und dem Nachkühler weniger Wasser zur Kühlung zu geben.

Dadurch kann erreicht werden, dass das Druckgas in der Trocknungseinrichtung möglichst leicht, also mit möglichst wenig Energieeinwirkung, Feuchtigkeit an die Trocknungseinrichtung abgibt. Insbesondere ist der im Trockner erreichbare Drucktaupunkt um so geringer, je kälter die Druckluft am Eintritt in den Trockner war. Mit kälterer Eintrittstemperatur in den Trockner kann auch die Feuchtigkeitsbeladung des Trockners geringer sein, wenn ein Kondensatabscheider und Kondensatableiter vor dem Trockner installiert sind.

Zudem ist Folgendes im Zusammenhang mit einem Drucktaupunkt, der auch einfach als Taupunkt bezeichnet werden kann, zu beachten. Für nachgelagerte Prozesse kann der Taupunkt nach dem Trockner entscheidend sein. Es kommt in Betracht, sowohl beim Kältetrockner als auch beim Adsorptionstrockner den Drucktaupunkt nach dem Trockner, also am Austritt bzw. an der Übergabestelle zu einer Anwendung des Druckgases zu regeln, indem die Temperatur vor dem Trockner angepasst wird. Zusätzlich können weitere Maßnahmen vorgesehen sein, die in DE 10 2014 019 805 B3 beschrieben sind.

In einer Regelkaskade folgt dennoch aus einem Drucktaupunkt nach dem Trockner auch eine Eintrittstemperatur in den Trockner. Durch einen Kondensatabscheider vor dem Trockner können hier Drucktaupunkt und Temperatur nahezu übereinstimmen. Veranschaulichend kann das so erläutert werden, dass der Taupunkt vor dem Trockner geregelt wird, wobei aber nur die Temperatur vor dem Trockner gemessen wird, und nicht der Taupunkt vor dem Trockner, da eine Temperaturmessung wesentlich einfacher ist.

Gemäß einem Aspekt wird vorgeschlagen, dass die Kompressoreinrichtung, insbesondere die Kühleinrichtung, dazu vorbereitet ist, dass Kühlmittelströme so gesteuert werden, dass die Gesamtkühlmittelaustrittstemperatur als Temperatur des aus dem Primär- und/oder Sekundärkühlkreislauf austretenden Kühlmittels auf eine vorgebbare Sollaustrittstemperatur geregelt wird. Der Primärkühlkreislauf und der Sekundärkühlkreislauf versorgen die angeschlossenen Kühler mit kaltem Kühlmittel, das dann durch die Kühlmittelströme, die somit jeweils durch einen Kühler gesteuert werden, in dem jeweiligen Kühler erwärmt werden. Die so erwärmten Kühlmittelströme strömen dann wieder in dem Primärkühlkreislauf bzw. Sekundärkühlkreislauf zusammen und bilden einen Gesamtkühlmittelstrom, der an einer bestimmten Stelle aus dem Primär- bzw. Sekundärkühlkreislauf austritt. Bei diesem Austritt wird die Temperatur des austretenden Kühlmittels erfasst, also die Gesamtkühlmittelaustrittstemperatur, und sie wird somit durch all die Erwärmungen bestimmt, die die einzelnen Kühlmittelströme durch ihren jeweiligen Kühler erfahren haben.

Hier kann besonders von Bedeutung sein, dass der Gesamtkühlmittelstrom weiterverwendet wird, z.B. zum Heizen, oder dass andere Anforderungen an die Temperatur des ausströmenden Gesamtkühlmittelstroms gestellt werden, z.B. für eine Einleitung in einen Fluss.

Andererseits deutet eine zu geringe Gesamtkühlmittelaustrittstemperatur auf eine zu starke Kühlung hin, die unerwünscht ist, weil die Rückkühleinrichtung dann den zu hohen Volumenstrom mit zu geringer Temperaturdifferenz nicht auf die gewünschte Temperatur herunterkühlen kann, oder weil die Kühlwasserkosten, besonders, wenn Frischwasser verwendet wird, oder die Pumpenleistung und Lüfterleistungen, nebst zugehöriger Kosten, steigen. Für den Kompressor wäre eine gute Zwischenkühlung und gute Mantelkühlung jedoch hilfreich. Für den Trockner wäre auch eine gute Kühlung nach einer zweiten Verdichterstufe hilfreich. Eine unnötig starke Kühlung wäre aber ineffizient.

Somit wurde erkannt, dass es vorteilhaft ist, die Gesamtkühlmittelaustrittstemperatur auf eine vorgebbare Sollaustrittstemperatur zu regeln. Dadurch wird insbesondere sichergestellt, dass eine ausreichende Kühlung vorliegt und dass auch eine effiziente Kühlung vorliegt. Hinzu kommt, dass die Abwärme ggf. besser genutzt werden kann, je höher das Temperaturniveau ist, also je höher die Gesamtkühlmittelaustrittstemperatur ist.

Die Kompressoreinrichtung bzw. die Kühleinrichtung sind dadurch zum Steuern der Kühlmittelströme eingerichtet, dass sie ein entsprechendes Steuerprogramm aufweisen, das die betreffenden Temperaturen als Messwerte empfangen kann und davon abhängig Steuerbefehle zum Steuern der betreffenden Steuermittel ausgeben kann. Ein solches Steuerprogramm kann auf einem entsprechenden Prozessrechner der Kompressoreinrichtung, insbesondere der Kühleinrichtung, implementiert sein, während der Prozessrechner über entsprechende Schnittstellen zum Empfangen der benötigten Temperaturwerte und zum Abgeben der abzugebenden Steuerwerte verfügt.

Sollwerte für die Regelung bzw. Steuerung können von einer übergeordneten Steuerung vorgegeben werden, nämlich von der gemeinsamen Steuerungseinrichtung. So kann die Kühlmittelaustrittstemperatur des Gesamtkühlmittelstroms beispielweise von einer Heizungssteuerung abhängig von einer Außentemperatur über eine Heizkurve des zu heizenden Gebäudes vorgegeben werden.

Gemäß einem Aspekt wird vorgeschlagen, dass die Kompressoreinrichtung, insbesondere die Kühleinrichtung, dazu vorbereitet ist, dass der Kühlmittelstrom des Ölkühlers mittels des betreffenden Steuermittels so gesteuert wird, dass eine vorgegebene Öltemperatur ausgeregelt wird. Hier wurde besonders erkannt, dass durch das Ausregeln der konkreten Öltemperatur, die entsprechend vorgegeben werden kann, ein effizienter Betrieb erreicht werden kann. Es kann erreicht werden, dass die Öltemperatur nicht zu hoch wird und damit der Kompressor nicht überhitzt, sie aber auch nicht zu niedrig wird und die möglichst optimale Viskosität des Öles zur Schmierung der Lager und Getriebe erreicht wird, wodurch sich die Effizienz der Kühlung und/oder des Kompressorbetriebs verschlechtern könnte. Bei zu kaltem Öl wäre die Viskosität des Öles zu hoch und dadurch der Widerstand u.a. in den Lagern zu hoch, was zu einer höheren Leistungsaufnahme führen würde. Bei dauerhaft zu kaltem Öl kann es zudem zu einem erhöhten Wasseranteil im Öl kommen, was sich nachteilig auswirken würde.

Die Kompressoreinrichtung bzw. die Kühleinrichtung kann dadurch dazu vorbereitet sein, zumindest einen Kühlmittelstrom eines Kühlers zum Ausregeln einer entsprechenden Temperatur zu steuern, dass ein Prozessrechner vorgesehen ist, auf dem eine entsprechende Steuerung implementiert ist. Der Prozessrechner kann dazu über Eingangsschnittstellen und Ausgangsschnittstellen verfügen. Über die Eingangsschnittstellen können Temperaturwerte empfangbar sein und über die Ausgangsschnittstellen Steuerwerte abgebbar sein, besonders an die betreffenden Steuermittel.

Gemäß einem Aspekt wird vorgeschlagen, dass der Kühlmittelstrom des wenigsten einen Druckgaskühlers, insbesondere des Nachkühlers, mittels des betreffenden Steuermittels so gesteuert wird, dass eine vorgegebene Druckgasaustrittstemperatur nicht überschritten und/oder nicht unterschritten wird. Hier wird besonders vorgesehen, dass das Druckgas nicht zu heiß wird, und das kann durch das Steuern des Kühlmittelstroms des entsprechenden Druckgaskühlers erreicht werden. Insbesondere wird vorgeschlagen, dass der Kühlmittelstrom des wenigstens einen Druckgaskühlers, insbesondere des Nachkühlers, so gesteuert wird, dass das Druckgas nicht stärker als nötig gekühlt wird.

Außerdem oder alternativ wird vorgeschlagen, dass der Kühlmittelstrom des wenigstens einen Gehäusekühlers, insbesondere des Mantelkühlers, so gesteuert wird, dass eine Kühlmittelaustrittstemperatur dieses Kühlmittels geringer ist als eine Kühlmittelaustrittstemperatur eines des wenigstens einen Druckgaskühlers, insbesondere des Zwischenkühlers. Hier wurde besonders erkannt, dass dadurch eine gute Verteilung der Kühlung erreicht werden kann und die beiden unterschiedlichen Kühler, nämlich der Gehäusekühler und der Druckgaskühler, aufeinander abgestimmt werden können. Besonders wird vorgeschlagen, das zur Verfügung stehende Kühlwasser optimal zu nutzen und insbesondere die spezifische Leistung [kWh/m³] zu minimieren. Die Mantelkühlung und die Zwischenkühlung haben beide einen relevanten Effekt auf den erzeugten Druckgasvolumenstrom und die Leistungsaufnahme, was hiermit ausgenutzt wird.

Eine geringe Kühlmittelaustrittstemperatur des Kühlmittels kann grundsätzlich dadurch erreicht werden, dass der Kühlmittelstrom erhöht wird. Hier kann also der Kühlmittelstrom des Gehäusekühlers so lange erhöht werden, bis seine Austrittstemperatur unter der Austrittstemperatur des Kühlmittels des Zwischenkühlers ist. Dann wird eine entsprechend große Kühlleistung über den Gehäusekühler erreicht, was auch die Temperatur des Druckgases oder zumindest teilverdichteten Druckgases verringert.

Hier wurde besonders erkannt, dass die Mantelkühlung einen großen Effekt auf die spezifische Leistung haben kann. Bei optimaler Kühlung des Gehäuses nimmt das Gehäuse eine optimale Größe ein, sodass die Spalten minimal werden. Wenn das Gehäuse in Relation zu den Rotoren wärmer wird, da es schlechter gekühlt wird, wird der Spalt zwischen den Rotoren und dem Gehäuse, aber auch der Spalt zwischen den beiden Rotoren größer. Dadurch strömt mehr bereits verdichtetes Gas aus einer Kammer in die vorherige Kammer zurück. Dadurch reduziert sich der geförderte Gasmassenstrom, die Leistungsaufnahme steigt und das Gas wird heißer.

Die Zwischenkühlung hat ebenfalls einen Effekt auf die spezifische Leistung. Je höher die Temperatur am Eintritt einer zweiten Verdichterstufe wird, umso höher wird auch der entsprechende Zwischendruck. Der Grund hierfür ist, dass der Volumenstrom der zweiten Verdichterstufe konstant bleibt, aber bei höherer Gastemperatur dieser Volumenstrom erst bei höherem Druck erreicht wird. Der Massenstrom wird durch die erste Verdichterstufe bereits vorgegeben.

Somit kann vermieden werden, dass die erste Verdichterstufe auf einen höheren Druck verdichten müsste, als wenn die Zwischenkühlung schlechter wäre.

Gemäß einem Aspekt wird vorgeschlagen, dass der Kühlmittelstrom des wenigstens einen Gehäusekühlers, insbesondere des Mantelkühlers, so gesteuert wird, dass eine Differenz zwischen Kühlmittelaustrittstemperatur bei Austritt des Kühlmittels aus dem Gehäusekühler zu einer Kühlmitteleintrittstemperatur bei Eintritt dieses Kühlmittels in den Gehäusekühler
- unter einem vorbestimmbaren ersten Wert liegt und/oder
- über einem vorbestimmbaren zweiten Wert liegt, und/oder
- zwischen einem vorbestimmbaren dritten und vierten Wert liegt.

Hier wurde besonders als vorteilhaft erkannt, eine programmierte Mindesterwärmung vorzusehen.

Dabei wurde erkannt, dass es in vielen Fällen gut sein kann, so gut wie möglich zu kühlen, d.h. so viel Wasser wie möglich durchzuleiten. Es wurde aber auch erkannt, dass das aber auch eine Grenze haben kann, ab der es nicht mehr sinnvoll ist, da der Mehraufwand nicht mehr in passender Relation zum Nutzen steht. Möglichst viel Kühlwasser wäre zwar für den Verdichtungsprozess des Gases von Vorteil, würde aber viel Kühlwasser, bzw. Pumpenleistung kosten.

Wenn, um ein anschauliches Beispiel zu nennen, der Wasservolumenstrom für die Mantelkühlung verdoppelt wird und sich damit die Wassererwärmung von 40K auf 20K reduziert, ist dies meist sinnvoll und wirtschaftlich. Wenn aber, um ein weiteres Beispiel zu nennen, der Wasservolumenstrom für die Mantelkühlung verdoppelt wird und sich damit die Wassererwärmung von 2K auf 1K reduziert, ist dies nicht mehr sehr sinnvoll bzw. wirtschaftlich, da die Mehrkosten auf der Wasserseite, also für die Kühlung, die Einsparungen auf der Gasseite, also für die Druckgaserzeugung, übertreffen.

Gemäß einem Aspekt wird eine Regelung auf eine Mindesterwärmung des Kühlwassers bei einem, mehreren oder allen Wärmetauschern zumindest als Teilaspekt implementiert. Die größte praktische Bedeutung hat sie bei der Mantelkühlung, ist aber auch bei den übrigen Kühlern, auch beim Ölkühler, relevant.

Bei manchen Kühlern kann die Regelung auf eine Mindesterwärmung eingreifen, wenn unerreichbare Gastemperaturen vorgegeben werden, also z.B., wenn vorgegeben wird, dass eine Druckgastemperatur kleiner als eine Kühlmitteltemperatur des Gesamtkühlmittelstroms an dessen Eingang ist.

Ein weiterer Grund für die Regelung auf eine Mindesterwärmung wurde darin erkannt, dass ein zu großer Wasservolumenstrom, bzw. eine zu hohe Strömungsgeschwindigkeit zu Schäden führen kann. Wenn aber kein Messgerät für die Strömungsgeschwindigkeit vorhanden ist, kann das über die Temperaturerhöhung ausgewertet werden. Solange die Mindesttemperaturerhöhung erreicht ist, kann sichergestellt werden, dass auch bei maximaler Leistung die zulässige maximale Strömungsgeschwindigkeit nicht überschritten wird.

Erfindungsgemäß wird auch ein Verfahren zum Betreiben einer Kompressoreinrichtung vorgeschlagen. Die Kompressoreinrichtung umfasst dabei einen Kompressor zum Verdichten eines Gases zum Erzeugen von Druckgas, insbesondere Druckluft, und eine Kühleinrichtung, und die Kühleinrichtung umfasst einen Ölkühler zum Kühlen von durch den Kompressor erwärmten Öls, wenigstens einen Druckgaskühler zum Kühlen des ganz oder teilweise zum Druckgas verdichteten Gases, und wenigstens einen Gehäusekühler zum Kühlen eines Gehäuses oder eines Teils des Gehäuses des Kompressors, wobei der Ölkühler, der wenigstens eine Druckgaskühler und der wenigstens eine Gehäusekühler das Kühlen jeweils durch einen Kühlmittelstrom aus einem flüssigen Kühlmittel, insbesondere Wasser, erreichen und wobei jeder Kühlmittelstrom mit einem individuellen, ansteuerbaren Steuermittel so individuell gesteuert wird, dass eine Kühlleistung jeweils für den Ölkühler, den wenigstens einen Druckgaskühler und den wenigstens einen Gehäusekühler individuell gesteuert wird.

Das erfindungsgemäße Verfahren verwendet somit eine Kompressoreinrichtung mit Kompressor und Kühleinrichtung, wie vorstehend zu den Aspekten zu einer Kompressoreinrichtung mit Kompressor und Kühleinrichtung erläutert wurde. Zumindest eine Kompressoreinrichtung gemäß einem der genannten Aspekte wird verwendet.

Das Verfahren arbeitet so, wie ebenfalls vorstehend zu den Ausführungsformen der Kompressoreinrichtung erläutert wurde. Insbesondere die Verfahrensschritte, zu denen die Kompressoreinrichtung bzw. die Kühleinrichtung zum Ausführen vorbereitet sind, werden gemäß dem erfindungsgemäßen Verfahren oder gemäß Aspekten des erfindungsgemäßen Verfahrens durchgeführt.

Es wird somit besonders vorgeschlagen, dass das erfindungsgemäße Verfahren zum Betreiben einer Kompressoreinrichtung eine Kompressoreinrichtung gemäß wenigstens einem der vorstehend beschriebenen Aspekte verwendet.

Nachfolgend wird die Erfindung anhand von Ausführungsformen unter Bezugnahme auf die begleitenden Figuren exemplarisch näher erläutert.
- Fig. 1: zeigt eine Kompressoreinrichtung gemäß dem Stand der Technik in einer schematischen Darstellung,
- Fig. 2: zeigt einen Ausschnitt aus einer Kompressoreinrichtung in einer schematischen Darstellung,
- Fig. 3 bis 8: zeigen jeweils eine Kompressoreinrichtung jeweils gemäß einer Ausführungsform der Erfindung in einer schematischen Darstellung.
- Fig. 9: zeigt eine Kompressoreinrichtung mit zwei Verdichterstufen in einer schematischen, teilweise geschnittenen Darstellung.
- Fig. 10: zeigt eine erste Verdichterstufe der Kompressoreinrichtung der Figur 9 in einer vergrößerten Darstellung.

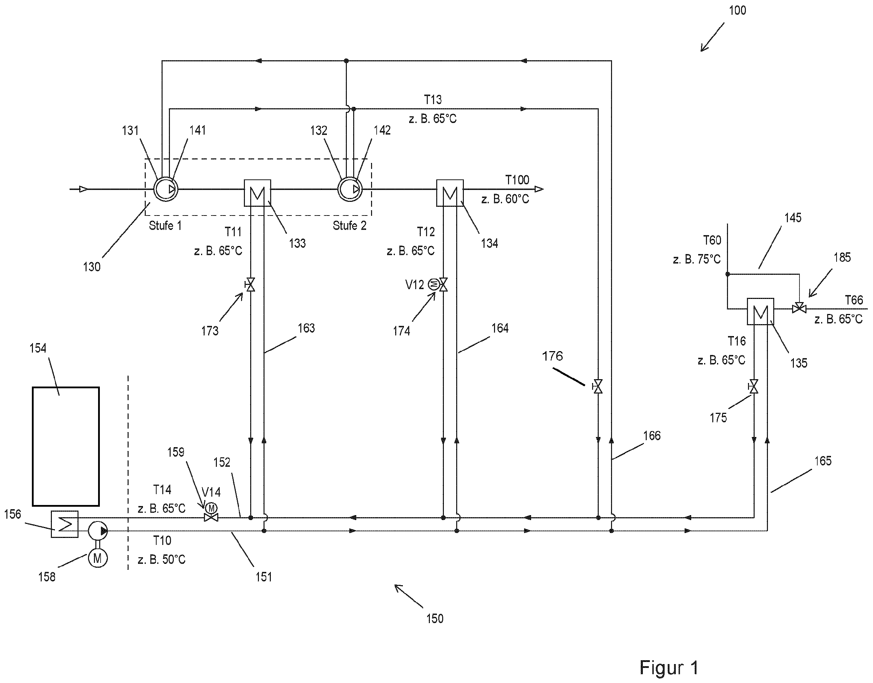

Fig. 1 zeigt eine Kompressoreinrichtung 100 mit einem Kompressor 130 mit einer ersten und zweiten Verdichterstufe 131 bzw. 132. Der Kompressor 130 und auch die übrigen Elemente sind schematisch dargestellt.

Weiterhin ist ein Zwischenkühler 133 und ein Nachkühler 134 vorgesehen, die auch als Druckluftzwischenkühler bzw. Druckluftnachkühler bezeichnet werden können. Der Zwischenkühler ist hier als Teil des Kompressors 130 dargestellt, da er zwischen der ersten und zweiten Verdichterstufe angeordnet ist, er kann aber auch als separates Element ausgebildet sein. Entsprechend kann der Nachkühler 134, der nicht als Teil des Kompressors 130 dargestellt ist, in einer anderen Ausgestaltung Teil des Kompressors sein.

Zur Kühlung der ersten und zweiten Verdichterstufe 131, 132 ist eine erste bzw. zweite Mantelkühlung 141 bzw. 142 vorgesehen. Die Mantelkühlungen 141 und 142 sind jeweils in die Verdichterstufe 131 bzw. 132 integriert.

Außerdem ist ein Ölkühler 135 vorgesehen. Der Ölkühler 135 ist mit einem Ölkreislauf 145 des Kompressors 130 verbunden. Der besseren Übersichtlichkeit halber ist die Verbindung zwischen Ölkreislauf 145 und Kompressor 130 in der Figur, und im Übrigen auch in den meisten anderen Figuren, nicht dargestellt.

Zur Kühlung der Kompressoreinrichtung 100 insgesamt ist ein Primärkühlkreislauf 150 vorgesehen mit einem Kühlmittelzulauf 151 und einem Kühlmittelrücklauf 152. Die genannten Kühler, nämlich der Zwischenkühler 133, der Nachkühler 134, der erste und zweite Mantelkühler 141, 142 und der Ölkühler 135, werden über diesen Primärkühlkreislauf mit kaltem Kühlmittel, im veranschaulichten Beispiel nämlich Wasser, versorgt, nämlich über den Kühlmittelzulauf 151. Das so durch die Kühler erwärmte Wasser strömt über den Kühlmittelrücklauf 152 zurück in eine Wärmesenke 154, die nur abstrakt angedeutet ist. Die Wärmesenke 154 kann, muss aber nicht mehr Bestandteil der Kompressoreinrichtung 100 sein. In der Wärmesenke bzw. als Wärmesenke ist ein Primärwärmetauscher 156 vorgesehen und ein gemeinsamer Kühlmittelstrom in dem Primärkühlkreislauf 150 kann durch eine Primärkühlmittelpumpe 158 erreicht werden.

Die genannten Kühler, nämlich der Zwischenkühler 133, der Nachkühler 134, erster und zweiter Mantelkühler 141, 142 und der Ölkühler 135 sind im Primärkühlkreislauf parallelgeschaltet. Damit werden all die genannten Kühler durch Kühlmittel von dem Primärkühlkreislauf 150 versorgt. Die jeweiligen Kühler sind dazu an den Primärkühlkreislauf parallel angeschlossen über einen Zwischenkühlerstrang 163, einen Nachkühlerstrang 164, einen Mantelkühlerstrang 166, bzw. einen Ölkühlerstrang 165.

Der Mantelkühlerstrang 166 versorgt somit zunächst den ersten und zweiten Mantelkühler 141, 142. In dem Beispiel gemäß der Fig. 1 sind dabei der erste und zweite Mantelkühler 141, 142 parallelgeschaltet.

Zum Einstellen der Kühlmittelströme bzw. ihrer Verhältnisse zueinander sind manuell einstellbare Ventile vorgesehen, nämlich ein manuelles Zwischenkühlerventil 173, ein manuelles Mantelkühlerventil 176 und ein manuelles Ölkühlerventil 175. Um den Zwischenkühler 133 und den Nachkühler 134 besser aufeinander abstimmen zu können, ist ein Nachkühlerstellventil 174 vorgesehen.

Ferner ist ein Primärstellventil 159 vorgesehen, das den Rücklauf des Gesamtkühlmittels im Kühlmittelrücklauf steuern kann.

Außerdem ist noch ein Öl-Bypass-Ventil 185 vorgesehen, mit dem der Strom des Öls durch den Ölkühler 135 gesteuert werden kann.

Fig. 1 zeigt somit ein funktionierendes Kühlkonzept, zu dem aber noch Verbesserungen erkannt wurden. Besonders hat sich herausgestellt, dass die einzelnen Kühler zumindest teilweise nicht gut aufeinander abgestimmt sind und zueinander unterschiedlich stark kühlen. Es wurde erkannt, dass hier ein Bedarf an Verbesserungen besteht, um eine gute, gleichmäßige und damit effiziente Kühlung für die Kompressoreinrichtung 100 zu erzielen. Ebenfalls wurde erkannt, dass ein Bedarf angepasster Kühlung für jeden Kühler besteht, der auch vom Betriebszustand der Kompressoreinrichtung, insbesondere ihrer Kühleinrichtung, abhängen kann. Besonders kann ein Bedarf angepasster Kühlung abhängig sein vom Enddruck, abhängig von der Drehzahl, abhängig von der Ansaugtemperatur, abhängig von der KühlwassereintrittstemperaturT10, abhängig von einer gewünschten Kühlwasseraustrittstemperatur bei der Temperaturmessstelle T14.

Es ist zu bemerken, dass die Kompressoreinrichtung 100 somit aus dem Kompressor 130 und den vielen genannten Kühlern und auch einschließlich dem Primärkühlkreislauf besteht, wobei die genannten Kühler einschließlich dem genannten Primärkühlreislauf (gegebenenfalls weiterer Sekundärkühlkreislauf) als Kühleinrichtung der Kompressoreinrichtung verstanden werden können.

Es ergeben sich besonders folgende Nachteile:
Die Aufteilung der Wasservolumenströme auf die parallelen Kühler musste manuell eingestellt werden, aber die Aufteilung der Wärmeleistungen und damit die Wassertemperaturen können abhängig vom Betriebspunkt deutlich schwanken.

Bei höherer gewünschter Austrittstemperatur an der Temperaturmessstelle T14 müssen der Ölkühler und die Mantelkühlung separat mit Kühlwasser gekühlt werden, was über ein sekundäres Kühlsystem erfolgen kann.

Aufgrund von diversen Störgrößen kann es deutliche Abweichungen zwischen den einzelnen Austrittstemperaturen T11, T12, T13, T16 geben.

Meist resultiert eine ineffektive Nutzung des Kühlwassers. Stufenbeschädigungen durch zu kaltes Kühlwasser sind möglich.

Ebenfalls wurde Folgendes als nachteilig festgestellt.

Die Wasseraustrittstemperatur wurde über ein gemeinsames Ventil V14 geregelt.

Die Öltemperatur wurde über einen Bypass zum Ölkühler geregelt. Der Ölkühler bekam meist unnötig viel Wasser, damit er auch im ungünstigsten Fall noch ausreichend kühlen kann.

Der Nachkühler bekam meist unnötig viel Wasser, damit er auch im ungünstigsten Fall noch ausreichend kühlen kann. Über das Ventil V12 wurden nur die Temperaturen T11 = T12 abgeglichen, um unterschiedliche Wärmeleistungen im Nachkühler kompensieren zu können.

Die Mantelkühlung bekommt meist zu wenig Wasser, um die gewünschte Austrittstemperatur T14 erreichen zu können - Manchmal aber auch zu viel und zu kaltes Wasser, was zu Schäden an den Stufen führen kann.

Zwischenkühlung bekommt nur ausreichend Wasser, um die gewünschte gemischte Austrittstemperatur T14 erreichen zu können.

Falls eine Komponente zeitweise eine bessere Kühlung benötigt, öffnet V14 weiter, sodass alle Wärmetauscher mehr Wasser bekommen, aber die gewünschte Wasseraustrittstemperatur T14 nicht mehr erreicht wird.

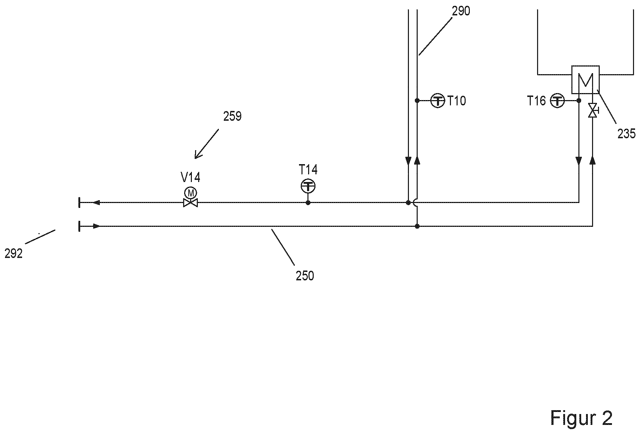

Fig. 2 zeigt einen Ausschnitt aus einer Kompressoreinrichtung mit dem Primärkühlkreislauf 250, der im Grunde dem Primärkühlkreislauf 150 der Fig. 1 entsprechen kann. Die Fig. 2 veranschaulicht besonders den Primärkühlkreislauf 250. Dieser kann über das Primärstellventil 259, das dem Primärstellventil 159 der Fig. 1 entsprechen kann, gesteuert werden, um die angeschlossenen Kühler mit Kühlmittel zu versorgen. Es kann über das Primärstellventil 259 die Durchflussmenge durch den Primärkühlkreislauf 250 gesteuert werden. Dadurch werden auch diverse angeschlossene Kühler, insbesondere diverse angeschlossene Wärmetauscher, gesteuert. Besonders wird hier der Ölkühler 235, der als Wärmetauscher ausgebildet ist, mit dem Kühlmittel durch den Primärkühlkreislauf 250 versorgt. Ebenfalls ist ein Parallelstrang 290 vorgesehen, der zu dem Kühlabschnitt, der den Ölkühler 235 versorgt, parallelgeschaltet ist und insbesondere die übrigen zu Fig. 1 genannten Kühler versorgen kann, der also insbesondere den Zwischenkühler 133, den Nachkühler 134 und den ersten und zweiten Mantelkühler 141, 142 versorgen kann.

Der Primärkühlkreislauf 250 kann über eine Schnittstelle 292 mit einer Wärmesenke verbunden sein, wie sie in Fig. 1 dargestellt ist.

Bisher gab es somit, Bezug nehmend auf Figur 2, bei den Trockenläufern ein Regelventil V14 im primären Kreislauf 250, welches die Durchflussmenge durch mehrere parallele Wärmetauscher gemeinsam regelt.

Es gab nur manuelle Ventile, um die Aufteilung der Durchflussmengen einzustellen.

Nur der Wärmetauscher für Stufe 2 hatte bereits ein eigenes Regelventil, da hier die Abweichungen am größten sind.

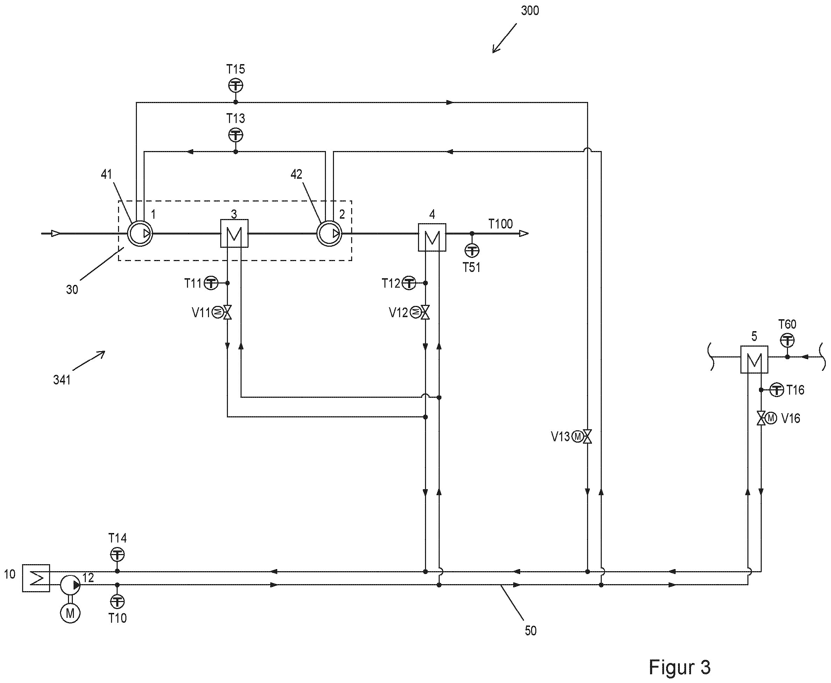

Fig. 3 zeigt eine Kompressoreinrichtung 300 gemäß einer Ausgestaltung. Diese Kompressoreinrichtung 300 weist ganz ähnlich zu der Kompressoreinrichtung 100 der Fig. 1 einen Kompressor 30 mit einer ersten und zweiten Verdichterstufe 1, 2 mit einem ersten und zweiten Mantelkühler 41, 42 auf. Der erste und zweite Mantelkühler 41, 42 sind in der gezeigten Ausführungsform zueinander in Reihe geschaltet.

Außerdem sind ein Zwischenkühler 3 und ein Nachkühler 4 vorgesehen, die jeweils Druckgas kühlen. DerZwischenkühler3 kühlt dabei ein teilweise verdichtetes Druckgas, während der Nachkühler 4 das vollständig verdichtete Druckgas kühlt.

Ebenfalls ist ein Ölkühler 5 vorgesehen, der Öl kühlt, das den Kompressor 30 durchströmt.

All die genannten Kühler 3, 4, 5, 41 und 42 sind an einen Primärkühlkreislauf 50 angeschlossen, der sie somit mit Kühlmittel versorgt. Zum Betreiben des Primärkühlkreislaufs sind - ähnlich wie auch in Fig. 1 gezeigt - ein Primärwärmetauscher 10 und eine Primärkühlmittelpumpe 12 vorgesehen. Der Primärwärmetauscher 10 und/oder die Primärkühlmittelpumpe 12 können jeweils einen Teil der Kompressoreinrichtung bilden, oder auch nicht.

Erfindungsgemäß ist nun vorgesehen, dass jedes der an den Primärkühlkreislauf 50 angeschlossenen Kühlelemente über ein eigenes, nämlich individuelles Steuermittel nichtmanuell, insbesondere über ansteuerbare Steuermittel, gesteuert werden kann. Dazu sind jeweils Stellventile V11, V12, V13 und V16 vorgesehen, die jeweils in einem zum Primärkühlkreislauf parallelgeschalteten Kühlmittelstrang angeordnet sind, um einen Kühlmittelstrom durch das jeweilige Kühlelement zu steuern. Stellventile können, in dieser und allen anderen Ausführungsformen, vereinfachend als Ventile bezeichnet werden. In Reihe geschaltete Kühler sind somit jeweils zu einem Kühlelement zusammengefasst. Der Zwischenkühler 3, der Nachkühler 4 und der Ölkühler 5 bilden somit jeweils ein Kühlelement.

Der erste und zweite Mantelkühler 41 und 42 sind somit zu einem gemeinsamen Mantelkühler 341 zusammengefasst, der somit ein Kühlelement bildet und über das Stellventil V13 angesteuert wird. Alternativ wären auch separate Ventile möglich.

Die genannten Kühlelemente, also Zwischenkühler 3, Nachkühler 4, Ölkühler 5 und Mantelkühler 341, können somit individuell angesteuert werden und dadurch kann ein abgestimmtes Kühlkonzept für die Kompressoreinrichtung 300 erreicht werden.

Besonders ist vorgesehen, zur Steuerung der jeweiligen Kühlelemente bzw. dazu zum Steuern der Stellventile V11 bis V13 und V16 auch Temperaturen des Kühlmittels, also des Kühlwassers, zu erfassen und zu berücksichtigen. Dafür sind entsprechende Temperaturmessstellen T10 bis T16 vorgesehen. Die Kühlungen können dadurch aufeinander abgestimmt werden und das kann anhand der entsprechenden Temperaturen der Kühlströme, einschließlich des Gesamtkühlmittelstroms des Primärkühlkreislaufs 50 erfolgen.

Ergänzend können auch andere Temperaturen erfasst werden, und dazu wird in der Ausführungsform der Fig. 3 mit der Temperaturmessstelle T60 eine Öltemperatur erfasst. Es können auch weitere Temperaturen erfasst werden, insbesondere wenigstens eine Temperatur des Druckgases, was die Temperaturmessstelle T51 anzeigt. T100 stellt hier in dieser Figur die gleiche Austrittstemperatur aus der Kompressoreinrichtung dar, für die auch T51 vorgesehen ist. Es können aber auch Temperaturen des Druckgases an anderen Stellen erfasst werden, einschließlich an Stellen, an denen es noch nicht vollständig verdichtet wurde, insbesondere zwischen der ersten und zweiten Verdichterstufe 1, 2, oder auch vor der ersten Verdichterstufe 1.

Vorzugsweise können alle diese Temperaturen in die Steuerung der Kühlung und damit Steuerung der Stellventile V11 bis V13 und V16 einbezogen werden. Es ist aber nicht erforderlich, dass alle Temperaturen berücksichtigt werden. Vorzugsweise wird zumindest eine Temperatur berücksichtigt.

Die Kompressoreinrichtung gemäß Figur 3 hat somit einen Druckluft-Zwischenkühler 3, einen Druckluft-Nachkühler 4, Ölkühler 5 sowie Stufen 1, 2 mit Mantelkühlung 41, 42.

Bei diesem Ausführungsbeispiel gibt es einen Kühlwasserkreislauf 50, der einen Wärmetauscher 10, z.B. für die Wärmerückgewinnung, aufweist. Der Wärmetauscher 10 kann zur Abwärmenutzung verwendet werden, es kann aber auch ein Kühlsystem verwendet werden, das nicht zur Abwärmenutzung verwendet wird.

In Kombination mit einer Abwärmenutzung ist der Nutzen jedoch besonders groß.

Über die vier Regelventile V11, V12, V13 und V16 kann der Wasser-Volumenstrom durch die Komponenten 3, 4, 5, 1, 2 bzw. 41, 42 individuell und optimiert eigestellt werden.

Eine Regelung der (gemischten) Wasseraustrittstemperatur T14 des Kompressors ist über die o.g. Ventile V11, V12, V13, V16 möglich.

Besonders wird vorgeschlagen, dass die Temperaturen nach der ersten und zweiten Verdichterstufe, somit gemäß den Figuren an den Messstellen T11 und T12 einbezogen werden, um Dampfblasenbildung und damit verbundene Gefahren auszuschließen.

Es wird vorgeschlagen, mindestens eine Öltemperatur z.B. an der Messstelle T60 in die Steuerung einzubeziehen, um den Wasservolumenstrom durch den Ölkühler zu regeln. Alternativ könnte eine Bauteiltemperatur, z.B. eine Lageraußenringtemperatur verwendet werden.

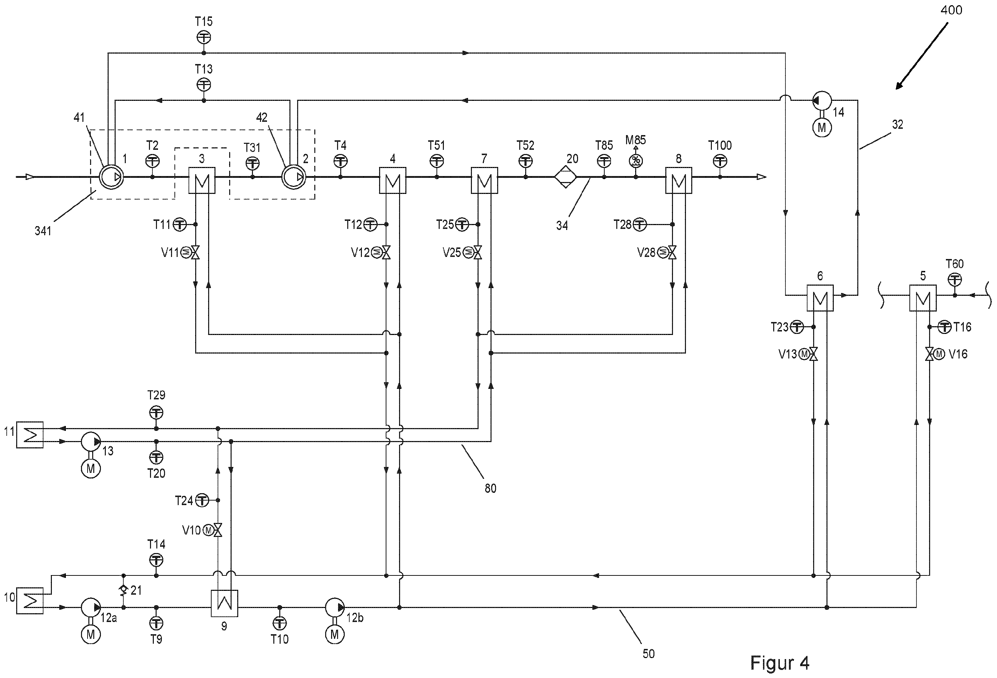

Besonders bevorzugt wird vorgeschlagen, eine Eintrittstemperatur des Druckgases in die zweite Verdichterstufe, somit besonders an der in Figur 4 gezeigten Messstelle T31 mit in die Steuerung einzubeziehen, um die zweite Verdichterstufe vor Übertemperatur zu schützen.

Besonders bevorzugt wird vorgeschlagen, die Austrittstemperaturen des Kühlmittels beim Austritt aus dem Mantelkühler der zweiten bzw. ersten Verdichterstufe in die Steuerung einzubeziehen, also gemäß den entsprechenden Figuren die Temperaturen an den Messstellen T13 und T15. Das wird vorgeschlagen, um Dampfblasenbildung auszuschließen.

Vorzugsweise wird vorgeschlagen, eine Austrittstemperatur des Druckgases beim Austritt aus der Kompressoreinrichtung in die Steuerung mit einzubeziehen. Das kann die Temperatur an der Messstelle T100 gemäß den entsprechenden Figuren sein. Es wird vorgeschlagen, dass diese bei der individuellen Regelung und Optimierung mit einbezogen werden.

Eine gemischte Wasseraustrittstemperatur, also die Austrittstemperatur des Gesamtkühlmittelstroms, nämlich die Temperatur an der Messstelle T14 gemäß den entsprechenden Figuren, wurde als relevant erkannt und es wird vorgeschlagen, sie in die Steuerung mit einzubeziehen.

Ebenfalls als relevant wurden die Temperaturen an den Messstellen T100, T14 und T60 erkannt. Besonders bevorzugt werden sie in die Steuerung mit einbezogen.

Es wurde zudem erkannt, dass für jedes Ventil mindestens ein Temperaturfühler, insbesondere eine entsprechende Messstelle, vorteilhaft für die Regelung ist. Es wird somit vorgeschlagen, diese Temperaturfühler vorzusehen und sie insbesondere mit in die Steuerung einzubeziehen.

Zur Steuerung des Ventils V11 wird vorgeschlagen, wenigstens eine, mehrere oder alle Temperaturen der Messstellen T14, T11 und/oder T31 zu verwenden. Vorzugsweise können zudem Temperaturen wenigstens einer der in Figur 4 gezeigten Messstellen T2 und T4, T12 und T10 und ggf. weiterer Messstellen verwendet werden.

Zur Steuerung des Ventils V12 wird vorgeschlagen, wenigstens eine, mehrere oder alle Temperaturen der Messstellen T100, T14, T12 und/oder T51 zu verwenden. Vorzugsweise können zudem Temperaturen wenigstens einer der in Figur 4 gezeigten Messstellen bzw. die Temperaturen T52 und T85 und M85 und ggf. weiterer Messstellen bzw. weitere Temperaturen verwendet werden.

Zur Steuerung des Ventils V13 wird vorgeschlagen, wenigstens eine, mehrere oder alle Temperaturen der, teilweise in Figur 4 gezeigten, Messstellen T13, T15 und/oder T23 zu verwenden. Vorzugsweise können zudem Temperaturen wenigstens einer der, teilweise in Figur 4 gezeigten, Messstellen T2 und T4, T14 bzw. T29, und T10 bzw. T20 und ggf. weiterer Messstellen verwendet werden.

Zur Steuerung des Ventils V16 wird vorgeschlagen, wenigstens eine Öltemperatur zu verwenden, insbesondere wenigstens eine der, teilweise in Figur 1 gezeigten, Temperaturmessstellen T60 und/oder T66. Außerdem oder alternativ kann auch wenigstens eine charakteristische Bauteiltemperatur, z.B. Lagertemperatur verwendet werden. Vorzugsweise können zudem Temperaturen der, teilweise in Figur 4 gezeigten, Messstellen T16, T14 bzw. T29, und T10 bzw. T20 verwendet werden, und ggf. weitere Temperaturen bzw. Temperaturen weiterer Messstellen.

Die nachfolgenden Figuren beschreiben andere Ausführungsformen, der besseren Übersichtlichkeit halber werden aber teilweise identische Bezugszeichen zur Ausführungsform der Fig. 3 verwendet, um Zusammenhänge besser zu zeigen. Es ist dafür aber nicht erforderlich, dass die Elemente tatsächlich identisch sind. Wird beispielsweise ein dritter oder vierter Druckgaskühler zum Zwischenkühler und Nachkühler ergänzt, kommt in Betracht, dass entsprechend der Zwischenkühler und Nachkühler geringer dimensioniert werden könnten. Dennoch werden der besseren Übersichtlichkeit halber auch in nachfolgenden Ausführungsformen für den Zwischenkühler und Nachkühler jeweils dieselben Bezugszeichen, nämlich 3 und 4, verwendet.

Fig. 4 zeigt eine Ausführungsform einer Kompressoreinrichtung 400, die für den ersten und zweiten Mantelkühler 41, 42 einen Mantelkühlerwärmetauscher 6 vorsieht, der auch vereinfachend als Wärmetauscher bezeichnet werden kann. Die Mantelkühler 41, 42 sind auch hier in Reihe geschaltet, aber ein Kühlmittelstrom durch die Mantelkühler 41, 42 wird durch eine Mantelkühlerpumpe 14 getrieben und treibt somit einen eigenen Kühlkreislauf an, der als Verdichterkühlkreislauf bezeichnet werden kann, denn das Kühlmittel strömt durch entsprechende Mantelbereiche im ersten bzw. zweiten Verdichter 1, 2. Die Mantelkühlerpumpe 14 ist somit eine Kühlwasserpumpe für den Verdichterkühlkreislauf 32. Dieser Verdichterkühlkreislauf 32 wird durch den Wärmetauscher 6 geführt, nämlich durch eine Primärseite des Mantelkühlerwärmetauschers 6. Durch die Sekundärseite des Mantelkühlerwärmetauschers 6 strömt Kühlmittel aus dem Primärkühlkreislauf 50. Der entsprechende Kühlmittelstrom vom Primärkühlkreislauf 50 durch den Mantelkühlerwärmetauscher 6 wird durch das Stellventil V13 gesteuert.

Vorzugsweise wird das Ventil V13 in Abhängigkeit von den Temperaturen T13 und/oder T15 angesteuert. Die Temperatur T23 ergibt sich dann. Temperaturen an Messstellen Txx können nachfolgend und vorstehend auch vereinfachend und synonym als Temperaturen Txx bezeichnet werden.

Die Temperaturen T13 und/oder T15 werden gegenüber T23 als relevanter angesehen. T23 könnte jedoch alternativ verwendet werden.

Sowohl bei der Temperaturmessstelle T13, als auch bei der Temperaturmessstelle T15 gibt es die Gefahr der Dampfbildung. Daher wird vorgeschlagen, dort diese Temperaturen zu messen.

Beim Kaltstart bleibt V13 geschlossen, sodass es dann keine Kühlmittelströmung bei T23 gibt. Bei der Temperaturmessstelle T23 ergibt sich dann somit auch keine steigende Temperatur.

Die Temperaturmessstellen T13 und T15 werden vorzugsweise unmittelbar an einem höher gelegenen Austritt platziert. Dadurch können auch ohne aktive Umwälzung Temperaturanstiege erfasst werden, um davon abhängig zunächst eine Mantelkühlerpumpe zu starten. Dann resultiert daraus bei den Temperaturmessstellen T13 und T15 eine erzwungene Strömung und damit eine gute Temperaturmessung. Das Ventil V13 kann jedoch weiterhin geschlossen sein, sodass hier solange noch keine Messung und damit keine Regelung möglich ist. Wenn die Temperaturen T13 und/oder T15 weiter ansteigen, wird das Ventil V13 durch die Steuerung geöffnet, was auch als "auf geregelt" bezeichnet werden kann. Erst dann könnte die Temperatur an der Messstelle T23 für die Regelung verwendet werden.

Das Stellventil V13 kann als Mantelkühlerstellventil bezeichnet werden und es steuert den Kühlmittelstrom durch den Mantelkühlerwärmetauscher 6. Das Ventil V13 steuert den Kühlmittelvolumenstrom für den Mantelkühlungswärmetauscher6. In anderen Ausgestaltungen kann es auch den Kühlmittelvolumenstrom für die Mantelkühler 41, 42 steuern. Das Ventil V13 steuert die Temperaturen T13 und T15, und ggf. weitere, für den/die Mantelkühler. Der Volumenstrom für die Mantelkühlung 41, 42 wird bei der Ausgestaltung dieser Figur. 4 mit der Mantelkühlungspumpe 14 gesteuert.

Fig. 4 weist zudem einen zweiten und dritten Nachkühler 7, 8 auf, die auch als zweiter und dritter Druckluftnachkühler oder Druckgasnachkühler bezeichnet werden können, oder die vereinfachend als Wärmetauscher bezeichnet werden können, da sie bevorzugt als Wärmetauscher realisiert sind. Sie sind in einer Druckgasleitung 34 angeordnet, nämlich strömungsabwärts des Druckgases hinter dem Nachkühler 4 bzw. Druckgasnachkühler 4. Dadurch kann eine zusätzliche Kühlung des Druckgases erreicht werden.

Besonders bevorzugt ist es, was auch die Ausführungsform der Fig. 4 zeigt, einen Trockner für das Druckgas, insbesondere einen Adsorptionstrockner 20, zu verwenden, der in die Druckgasleitung 34 eingebunden ist. Bei einem Kältetrockner ergibt ein zusätzlicher Nachkühler ebenfalls Sinn, um hierüber den Taupunkt und die Austrittstemperatur zu regeln. Der Trocknernachkühler 8 ergibt beim Kältetrockner jedoch so wie dargestellt weniger Sinn. Bei Kältetrockner könnte der Wärmetauscher 8 eher zum Aufwärmen der Druckluft verwendet werden. Daher wird hier besonders die Verwendung eines Adsorptionstrockners vorgeschlagen. Beim Adsorptionstrockner wird der Wärmetauscher 8 besonders zum Abkühlen der Druckluft verwendet.

Hier wird besonders vorgeschlagen, dass der Druckgastrockner 20 in Strömungsrichtung des Druckgases hinter dem zweiten Nachkühler 7 und vor dem dritten Nachkühler 8 angeordnet ist.

Zum Steuern eines Kühlmittelstroms sowohl durch den zweiten Nachkühler 7 als auch den dritten Nachkühler 8 ist jeweils ein Stellventil V25 bzw. V28 vorgesehen. Somit können selbst der zweite und dritte Nachkühler 7, 8 unabhängig voneinander gesteuert werden.

Zusätzlich ist jeweils eine Temperaturmessstelle T25 bzw. T28 vorgesehen und dem zweiten bzw. dritten Nachkühler 7, 8 und damit dem entsprechenden Stellventil V25 bzw. V28 zugeordnet.

Hier wurde besonders erkannt, dass mit dem zweiten Wärmetauscher 7 der Trockner unterstützt werden kann und somit der Drucktaupunkt nach dem Trockner beeinflusst werden kann. Hierdurch reduziert sich jedoch auch die Austrittstemperatur aus dem Trockner, was manchmal erwünscht ist, aber manchmal auch unerwünscht ist.

Mit dem Wärmetauscher nach dem Trockner kann die Druckluft auf die optimale Temperatur für die nachgelagerte Anwendung gebracht werden. Bei einem Adsorptionstrockner kann die Luft am Austritt deutlich wärmer sein als am Eintritt, sodass hier eine nochmalige Kühlung erforderlich sein kann.

Das Stellventil V25, das den Kühlmittelstrom durch den zweiten Nachkühler 7 steuert, kann diesen Kühlmittelstrom in Abhängigkeit von der Temperatur steuern, die durch die Temperaturmessstelle T25 erfasst wird. Vorzugsweise wird mit dem Ventil V25 jedoch die Luftaustrittstemperatur T52 geregelt. Der Sollwert für diese Temperatur T52 ergibt sich bei Anlagen mit Trockner durch eine Regelkaskade aus dem gewünschten Drucktaupunkt nach dem Trockner. Bei Anlagen ohne Trockner ergibt sich der Sollwert für die Temperatur T52 aus dem Sollwert für die Temperatur T100, die von extern vorgegeben werden kann.

Eine Regelung nach der Temperatur T25, bzw. nach einer Temperaturdifferenz T25-T20 ist gemäß einer weiteren Ausgestaltung auch möglich.

Das Stellventil V25 steuert also den Kühlmittelstrom in Abhängigkeit von der Austrittstemperatur der Druckluft an der Temperaturmessstelle T52 aus dem zweiten Nachkühler 7.

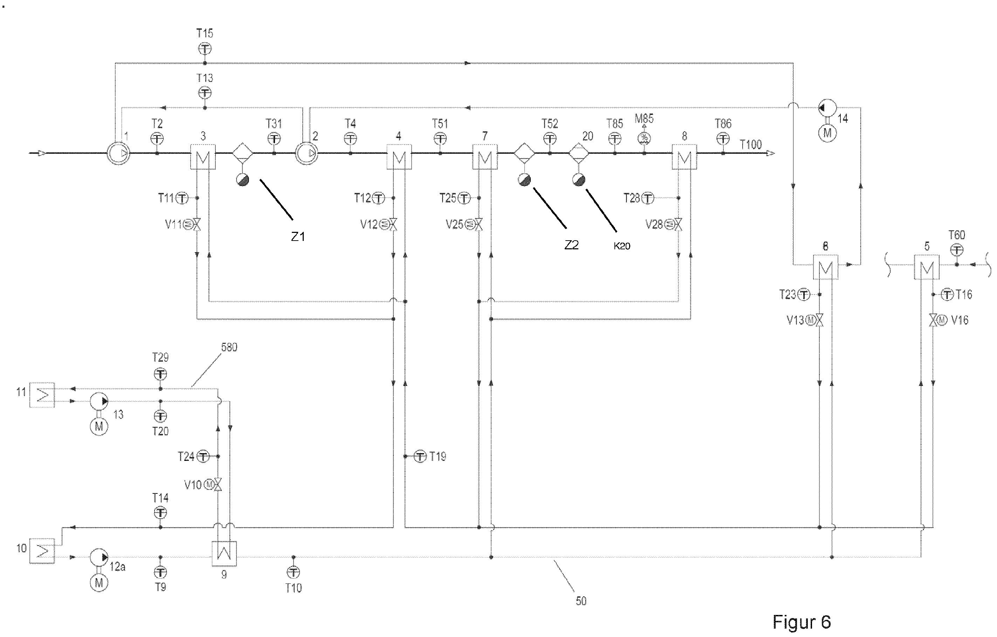

Ebenso ist vorgesehen, dass das Stellventil V28, das den Kühlmittelstrom durch den dritten Nachkühler 8 steuert, die in Figur 6 gezeigte Druckluftaustrittstemperatur T86, bzw. T100 regelt. Eine Regelung nach der Temperatur T28 oder der Differenztemperatur T28-T20 ist gemäß einer alternativen Ausgestaltung vorgesehen.

Dies kann somit in Abhängigkeit von der Temperatur der Temperaturmessstelle T28 erfolgen, es ist also möglich, den Kühlmittelstrom in Abhängigkeit von der Kühlmitteltemperatur am Ausgang des dritten Nachkühlers 8 zu steuern.

Für den zweiten und dritten Nachkühler 7 und 8 ist zur Versorgung mit Kühlmittel ein Sekundärkühlkreislauf 80 vorgesehen.

Der Sekundärkühlkreislauf 80 kann über einen Sekundärwärmetauscher 11 Wärme wieder abgeben und sein Kühlmittelstrom kann über eine Sekundärkühlmittelpumpe 13 angetrieben werden. Durch diesen Sekundärkühlkreislauf ist eine weitgehend unabhängige Kühlung durch den zweiten und dritten Nachkühler 7 und 8 möglich, nämlich unabhängig von den übrigen Kühlern und unabhängig von dem Primärkühlkreislauf.

In der gezeigten Ausführungsform ist zusätzlich vorgesehen, dass der Sekundärkühlkreislauf 80 einen Kühlmittelstrom, insbesondere Gesamtkühlmittelstrom, des Primärkühlkreislaufs kühlt, und dazu ist ein entsprechender Primär-Sekundär-Wärmetauscher 9 vorgesehen. Zur Ansteuerung ist zudem das Stellventil V10 vorgesehen, das somit in einem Kühlmittelstrang des Primär-Sekundär-Wärmetauschers 9 angeordnet ist. Die Ansteuerung des Stellventils V10 kann in Abhängigkeit von einer Nachlauftemperatur des Kühlmittels, das den Primär-Sekundär-Wärmetauscher 9 verlässt, erfolgen. Dafür ist eine Temperaturmessstelle T10 vorgesehen. Die Temperatur des Kühlmittels, das durch das Stellventil V10 strömt, kann an der Temperaturmessstelle T24 erfasst werden.

Es wird ebenfalls vorgeschlagen, die Primärkühlmittelpumpe 12 gemäß Fig. 3 in der in Fig. 4 gezeigten Ausführungsform aufzusplitten, also stattdessen zwei Primärkühlmittelpumpen 12a und 12b vorzusehen, nämlich eine vor und die andere nach dem Primär-Sekundär-Wärmetauscher 9. Außerdem kann ein Primärkreislauf-Bypass 21 vorgesehen sein, über den ein Teil des Gesamtkühlmittelstroms des Primärkühlkreislaufs 50 an dem Primärwärmetauscher 10 vorbeiströmt. Durch die interne Pumpe 12b kann in Zusammenspiel mit dem Bypass 21 und dem Wärmetauscher 9 der Betrieb des Kompressors und damit der Druckluftversorgung aufrechterhalten werden, auch wenn die externe Wärmesenke 10 und/oder die Pumpe 12a nicht zur Verfügung stehen. Das kann z.B. bei Wartungsarbeiten oder Umbaumaßnahmen, bzw. auch bei saisonalem Wärmebedarf der Fall sein.

Die externe Pumpe 12a ist insbesondere für die externen Druckverluste, nämlich im Wärmetauscher 10 und in Rohrleitungen und ggf. weiteren Elementen, ausgelegt. Die interne Pumpe 12b kann zur Unterstützung mitlaufen oder auch nur für den Bedarfsfall in Bereitschaft stehen. Sie schaltet dann erst zu, wenn die Primärkühlmittelpumpe 12a nichts oder zu wenig Wasser liefert und der Kompressor sonst zu heiß werden würde und es zu einer Abschaltung kommen würde.

Außerdem ist eine Drucktaupunkttemperatur-Messstelle M85 nach der Trocknungseinrichtung 20 vorgesehen. Somit wird an der Stelle die Drucktaupunkttemperatur bestimmt und davon abhängig kann die Kühlung gesteuert werden. Insbesondere wird vorgeschlagen, in Abhängigkeit von der Drucktaupunkttemperatur den zweiten Nachkühler 7 zu steuern und/oder die Ventile V25 und/oder V28.

Besonders ist der Drucktaupunkt nach dem Trockner relevant. Am Eintritt des Trockners ist die Druckluft meist zu 100% gesättigt. Daher stimmen hier die Temperatur und der Drucktaupunkt nahezu überein, vorausgesetzt, das ausgefallene Kondensat wurde vor dem Trockner möglichst vollständig abgeschieden und abgeleitet.

Für das Trocknungsergebnis ist besonders die Temperatur des Druckgases am Eintritt in den Trockner wichtig.

Wenn das Kondensat vor dem Trockner nicht abgeschieden werden würde, dann würde das Trocknungsergebnis etwas schlechter werden. Der Kompressor sollte jedoch so ausgelegt sein, dass das bereits ausgefallene Kondensat vorher schon abgeschieden wird.

Die Kondensatabscheider und Ableiter wurden in den Abbildungen teilweise aus Vereinfachungsgründen nicht dargestellt.

Davon abgesehen ist in der Ausführungsform der Fig. 4 vorgesehen, noch einige weitere Temperaturen im Vergleich zur Ausführungsform der Fig. 3 aufzunehmen. Dafür sind insgesamt die Temperaturmessstellen T1 bis T100 vorgesehen, soweit sie in der Fig. 4 eingezeichnet sind.

Nachfolgend folgt besonders eine Zusammenfassung einiger wesentlicher Aspekte der Ausführung gemäß Fig. 4.

Die Kompressoreinrichtung gemäß Figur 4 hat somit noch zwei Zusatzkühler 7, 8.

Bei dieser Ausführung gibt es zwei Kühlwasserkreisläufe 50, 60, auf die die Kühler und die Mantelkühlung verteilt sind.

Der sekundäre Kreislauf 80 kann über einen Kühlturm 11 zur Wärmeabfuhr verfügen, um ein bevorzugtes Beispiel zu nennen.

Über die zwei Regelventile V25 und V28 kann auch der Wasser-Volumenstrom durch die Zusatzkühler 7, 8 individuell und optimiert eigestellt werden.

Bei der Verstellung der Ventile wird hier auch der gemessene Drucktaupunkt M85 berücksichtigt, sodass dieser optimiert wird. Zur Einstellung des Drucktaupunktes können die Ventile V25 und V12 angesteuert werden.

Zum Ansteuern des Ventils V28 wird besonders die Austrittstemperatur T100 verwendet. Die Temperatur T100 wird auch von den Ventilen V25 und V12 beeinflusst.

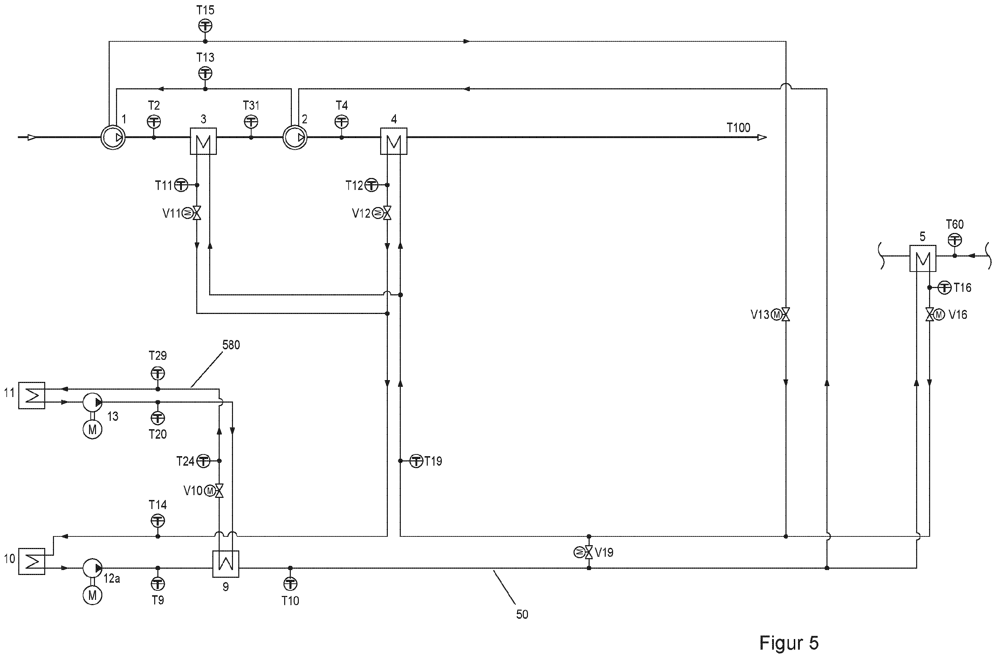

Die Ausführungsform der Fig. 5 geht wieder von der Ausführungsform gemäß Fig. 3 aus und sieht dazu ergänzend einen Sekundärkühlkreislauf 580 vor, der aber ausschließlich zum Kühlen des Gesamtkühlmittelstroms des Primärkühlkreislaufs 50 vorgesehen ist. Insoweit entspricht die Ausgestaltung des Sekundärkühlkreislaufs 580 der des Sekundärkühlkreislaufs 80 der Fig. 4, insbesondere hinsichtlich ihrer Verknüpfung über den Primär-Sekundär-Wärmetauscher 9.

Ein Primär-Bypass 21, wie in Fig. 4 gezeigt, ist in der Ausführungsform gemäß Fig. 5 nicht vorgesehen, es kommt aber dennoch in Betracht, einen solchen auch hier zu verwenden.

Die Ausführungsform der Fig. 5 sieht zusätzlich ein Primär-Bypass-Stellventil V19 vor, das vereinfachend auch als Bypassventil V19 bezeichnet werden kann, und über das ein Teil des Gesamtkühlmittelstroms des Primärkühlkreislaufs 50 vor dem Abgriff - gemäß einer Ausführung auch nach dem Abgriff- durch den ersten und zweiten Mantelkühler 1, 2 und den Ölkühler 5 dem Zwischenkühler 3 und Nachkühler 4 zugeführt werden kann. Insoweit unterscheidet sich auch die Ausführungsform der Fig. 5 von der der Fig. 3 und auch der Fig. 4, dass der Zwischenkühler 3 und der Nachkühler 4 nur über dieses Primär-Bypass-Stellventil V19 Teil des Kühlstroms direkt erhalten kann, der noch nicht durch den Ölkühler 5 und den ersten und zweiten Mantelkühler 41 und 42 erwärmt wurde. Bei dieser Ausführungsform der Fig. 4 ist es nämlich so, dass die Wärme, die das Kühlmittel im Ölkühler 5 und in dem ersten und zweiten Mantelkühler 41 und 42 aufgenommen hat, auch durch einen der beiden Druckgaskühler, also den Zwischenkühler 3 oder den Nachkühler 4, geführt wird, soweit nicht ein Teil des Kühlmittelstromes durch das Primär-Bypass-Stellventil V19 daran vorbeigeleitet wurde.

Dies wird als eine optimierte Verschaltung zur Abwärmenutzung auf hohem Temperaturniveau vorgeschlagen. Der Ölkühler und die Mantelkühlung erhalten hier einen maximalen Volumenstrom mit noch nicht vorgewärmtem Primärwasser, das noch die Temperatur T10 hat.

Das Primär-Bypass-Stellventil V19 wird besonders beim Kaltstart eingesetzt. Wenn das Öl noch nicht die Betriebstemperatur erreicht hat, ist das Primär-Bypass-Stellventil V19 geschlossen. Bei noch kaltem Kühlmittel, also kaltem Wasser besonders mit niedrigen Temperaturen an den Temperaturmessstellen T10, T13, T15 kann auch das Stellventil V13 geschlossen sein. Es wurde jedoch erkannt, dass die Ventile V11 und V12 schon sehr schnell nach dem Kaltstart einen ausreichenden Wasserdurchfluss steuern sollten. Daher wird vorgeschlagen, beim Kaltstart das Ventil V19 zu öffnen. Im Betrieb, wenn der Kaltstartvorgang abgeschlossen ist, wird vorgeschlagen, das Bypassventil V19 wieder etwas zu schließen, damit der Ölkühler und die Mantelkühlung einen relativ hohen Kühlwasservolumenstrom bekommen können.

Eine vorgegebene Wasseraustrittstemperatur, also Solltemperatur, an der Messstelle T14 kann sich nur aus einer Mischung der Teilkühlmittelströme mit den Temperaturen T11 und T12 ergeben. Bei diesen beiden Kühlern können höhere Austrittstemperaturen erreicht werden. Besonders kann dadurch eine hohe Austrittstemperatur T14 erreicht werden.

Es wurde erkannt, dass sich folgende Vorteile ergeben.

Es kann die Abwärme vom Ölkühler und von der Mantelkühlung zur Abwärmenutzung bereitgestellt werden, auch bei Wassertemperaturen, bei denen dies bisher nicht möglich ist.

Es kann eine höhere Solltemperatur für die Austrittstemperatur T14 erreicht werden, da nur die Teilkühlmittel mit den Temperaturen T11 und T12 bzw. an den Messstellen T11 und T12 gemischt werden, wodurch sich eine Mischtemperatur ergibt, die nicht durch Kühlmittel mit den Temperaturen T16 und T15 heruntergemischt werden.

Es können somit mit einem Wassersystem hohe Temperaturen und gleichzeitig hohe Leistungen erreicht werden, für die sonst ein Heißwassersystem erforderlich wäre.

Nachfolgend eine Zusammenfassung einiger wesentlicher Aspekte der Ausführung gemäß Fig. 5._Die Ausführungsform der Figur 5 weist somit keinen Zusatzkühler auf.

Es gibt hier wieder zwei Kühlwasserkreisläufe 50, 580.

Die Kühler 3, 4, 5 und die Mantelkühlung der Stufen 1, 2 befinden sich im primären Kreislauf 50. Dabei gibt es hier zunächst eine Parallelschaltung des Ölkühlers 5 und der Mantelkühlung der Stufen 1, 2. In Reihe sind danach der Zwischenkühler 3 und der Nachkühler 4 geschaltet. Diese sind zueinander ebenfalls parallelgeschaltet.

Der sekundäre Kreislauf 580 kühlt hier bedarfsweise den primären Kreislauf 50.

Diese Verschaltungsvariante bietet besondere Vorteile bei der Wärmerückgewinnung über den Wärmetauscher 10, die auch als Abwärmenutzung bezeichnet werden kann.

Die Ausführungsform gemäß Fig. 6 entspricht der der Fig. 4, mit den Abweichungen, dass der zweite Nachkühler 7 und dritte Nachkühler 8 in einer Parallelschaltung an den Primärkühlkreislauf 50 angeschlossen sind. Ein Sekundärkühlkreislauf 580 ist ebenfalls vorgesehen, der wie in Fig. 5 ausgestaltet und mit dem Primärkühlkreislauf 50 gekoppelt ist.

Der Zwischenkühler 3 und Nachkühler 4, der synonym in dieser und den übrigen Ausführungsformen auch als erster Nachkühler 4 bezeichnet werden kann, sind, ähnlich wie in der Ausführungsform der Fig. 5, nicht in einer Parallelschaltung an den Primärkühlkreislauf 50 angeschlossen, sondern in einer Reihenschaltung, in der ihnen das Kühlmittel aus dem Primärkühlkreislauf 50 zugeführt wird, nachdem es durch die übrigen Kühler geströmt ist. Ein Primär-Bypass-Stellventil V19, wie in Fig. 5 gezeigt, ist hier entbehrlich, da insbesondere durch den zweiten Nachkühler 7 zusammen mit dem Stellventil V25 immer ein ausreichender Wasservolumenstrom strömt, sodass der in Reihe nachgeschaltete Zwischenkühler 3 und der Nachkühler 4 immer einen ausreichenden Volumenstrom bekommen können.

Zur Erfassung der Temperatur T100 des Druckgases am Ausgang der Kompressoreinrichtung ist die Temperaturmessstelle T86 vorgesehen. Jeweils ein Abscheider Z1 und Z2, die besonders als Zyklonenabscheider ausgebildet sein können, sind, sowie ein Kondensatableiter K20 in der Figur 6 ebenfalls dargestellt. Sie können in den übrigen Ausführungsformen ebenfalls vorhanden sein, auch wenn sie nicht gezeigt sind.

Nachfolgend eine Zusammenfassung einiger wesentlicher Aspekte der Ausführung gemäß Fig. 6. Bei dieser Ausführungsform der Figur 6 sind somit Zusatzkühler 7, 8 vorhanden.

Es gibt hier wieder zwei Kühlwasserkreisläufe 50 und 580.

Die Kühler 3, 4, 5, 7, 8 und der Kühler 6 für die Stufen 1, 2 befinden sich im primären Kreislauf 50. Dabei gibt es hier zunächst eine Parallelschaltung des Ölkühlers 5 des Kühlers 6 für die Stufen 1, 2 und der Zusatzkühler 7, 8. In Reihe sind danach der Zwischenkühler 3 und der Nachkühler 4 geschaltet. Diese sind zueinander ebenfalls parallelgeschaltet.

Der sekundäre Kreislauf 580 kühlt hier bedarfsweise den primären Kreislauf 50.

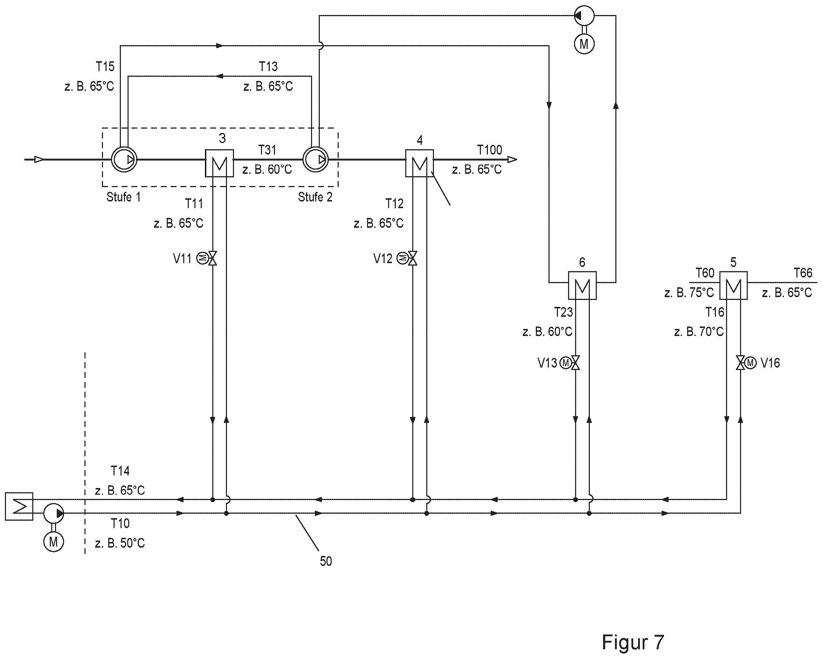

Die Ausführungsform der Fig. 7 entspricht im Wesentlichen dem Aufbau der Fig. 3. Sie unterscheidet sich aber darin, dass sie für den ersten Mantelkühler 41 und den zweiten Mantelkühler 42, also damit den Mantelkühler 341, einen Mantelkühlerwärmetauscher 6 vorsieht. Der Aufbau und der Kühlanschluss hinsichtlich der Mantelkühlung mittels des Mantelkühlerwärmetauschers 6 ist so realisiert, wie in Fig. 6 dargestellt.

In Fig. 7 sind zudem der Zwischenkühler 3 und der Nachkühler 4 jeweils eigenständig in Parallelschaltung an den Primärkühlkreislauf 50 angeschlossen. Dabei ergibt sich aber in der Fig. 7, ebenfalls wie in Fig. 3, eine Parallelschaltung des Zwischenkühlers 3 und des Nachkühlers 4 zum Primärkreislauf, und dieser geschilderte Unterschied zwischen Fig. 3 und 7 ist im Wesentlichen konstruktiver Natur.

Für die Ausführungsform der Figur 7 aber auch für die übrigen Ausführungsformen, ergeben sich folgende Vorteile.

Verbesserung der spezifischen Leistung um ca....1...3% durch bessere Mantelkühlung und Zwischenkühlung.

Höhere Wärmerückgewinnungsleistung möglich und ggf. weniger/kein Kühlwasserbedarf.

Eine Regelung auf eine höhere Wasseraustrittstemperatur T14, also die Möglichkeit der Vorgabe eines höheren Sollwertes für diese Wasseraustrittstemperatur T14, nämlich höher als bisher ist möglich. (z.B. 90°C...95°C statt ~85°C, wie bisher.)

Eine höhere Betriebssicherheit ist erreichbar, da sich der Kompressor bei Bedarf gezielt besser kühlen kann.

Eine einfachere Inbetriebnahme ist möglich, da kein manueller Abgleich der Strangregulierventile erforderlich ist.

Eine Wasseraufteilung wird insbesondere saisonal, witterungsabhängig, enddruckabhängig, drehzahlabhängig, automatisch angepasst.

Ein effizienter Einsatz des Kühlwassers ist möglich.

Weniger Druckluftverbrauch durch optimale Drucklufttemperatur kann erreicht werden.

Es ergeben sich die folgenden weiteren Vorteile.

Eine optimierte Regelung der gemischten Wasseraustrittstemperatur T14 mit separater Volumenstromregelung je Wärmequelle ist möglich.

Der Anwender kann eine Wasseraustrittstemperatur T14, eine maximale Druckluftaustrittstemperatur T100 und ggf. einen maximalen Drucktaupunkt vorgeben.

Der Ölkühler bekommt immer nur so viel Wasser wie nötig, um die optimale Öltemperatur zu erreichen.

Der Nachkühler hat fast keinen Einfluss auf die spezifische Leistung. Daher bekommt er nur so viel Wasser wie nötig, um die gewünschte, insbesondere maximale, Druckluftaustrittstemperatur T100, bzw. den Drucktaupunkt M85 zu erreichen, ohne dass es kocht, also so, dass die Temperatur, bspw. T12, unter 110°C bleibt.

Die Zwischenkühlung hat großen Einfluss auf spezifische Leistung und bekommt daher möglichst viel Wasser.

Die Mantelkühlung hat größten Einfluss auf spezifische Leistung und bekommt daher überproportional viel Wasser. Als Maß zur Regelung kann folgender Temperaturzusammenhang zu Grunde gelegt werden: T13-T10: = 0,5 * (T11-T10).

Falls eine Komponente zeitweise eine bessere Kühlung benötigt, kann sie auch besser gekühlt werden.

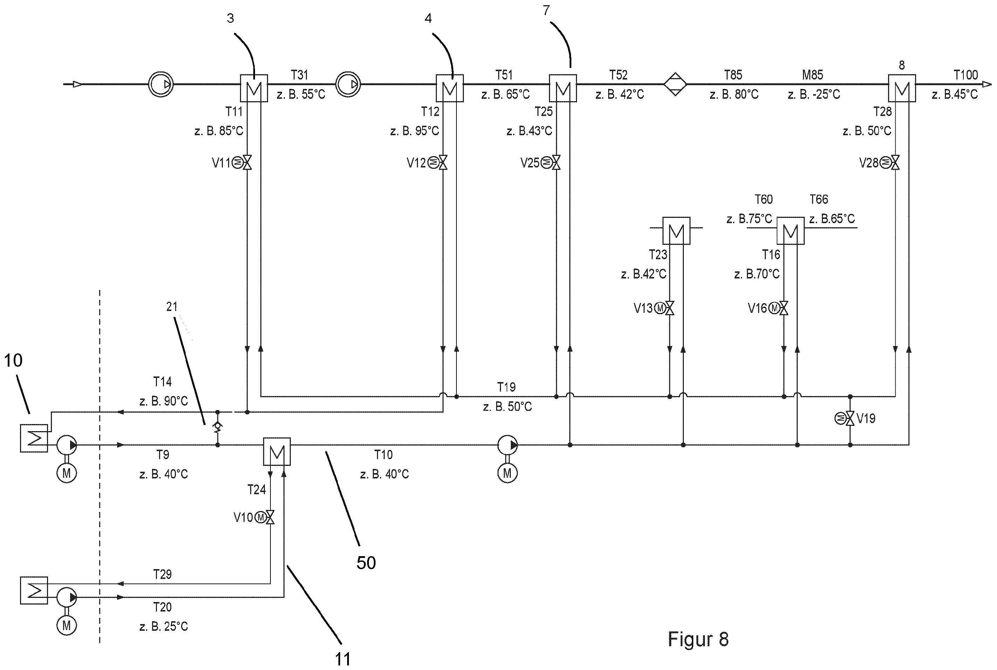

Die Ausführungsform der Fig. 8 entspricht im Wesentlichen der Ausführungsform der Fig. 6 in einer etwas anderen Darstellung. In der Darstellung der Fig. 8 ist zudem ein Primär-Bypass 21 vorgesehen und ein Primär-Bypass-Stellventil V19.

Hier ist zum Primär-Bypass-Stellventil V19 zusätzlich ein Wärmetauschersteuerventil V25 für einen Nachkühler vorgesehen, die als zwei alternative Ausführungsformen zu verstehen sind. Hiermit sollen mehrere optionale Ausführungen in einer Figur übersichtlicher dargestellt werden.

Dennoch könnte diese Ausführung mit Primär-Bypass-Stellventil V19 und Wärmetauschersteuerventil V25 realisiert werden. Sie könnte in einem Sonderfall sinnvoll sein, wenn im Winter wärmere Druckluft benötigt würde. Dann müssten die Ventile V28 und V25, für den Nachkühler so weit geschlossen werden, dass ohne das Primär-Bypass-Stellventil V19 öffnen zu müssen, nicht genug Wasser für den Zwischenkühler und Nachkühler zugeführt werden könnte.

Durch das Primär-Bypass-Stellventil V19 kann erreicht werden, dass dem Zwischenkühler 3 und Nachkühler 4 ein Teil des Kühlmittels zugeführt werden, das nicht den dritten Nachkühler 8 durchströmt hat. Wie in Fig. 6 ist nämlich in der Ausführungsform der Fig. 8 auch vorgesehen, dass der Zwischenkühler 3 und der Nachkühler 4 in dem Primärkühlkreislauf in einer Reihenschaltung angeordnet bzw. verschaltet sind, zueinander allerdings parallelgeschaltet sind.

Vor dem Kühler 8 kann eine Temperatur T85 aufgenommen werden.

Zu den Ausführungen der Fig. 5, 6 und 8 ist Folgendes zu bemerken. In diesen drei Ausführungsformen sind der Zwischenkühler 3 und der Nachkühler 4 zum Primärkühlkreislauf in Reihe geschaltet, wobei der Einfachheit halber für die nachfolgende Erläuterung das Primär-Bypass-Stellventil V19 außer Acht gelassen wird. Der Zwischenkühler 3 und der Nachkühler 4 erhalten somit zusammen den vollständigen Kühlmittelstrom, also den Gesamtkühlmittelstrom des Primärkühlkreislaufs 50, da dies durch die Reihenschaltung bedingt ist. Dennoch ist aber in all diesen drei Ausführungsformen eine Parallelschaltung des Zwischenkühlers 3 und des Nachkühlers 4 zueinander vorgesehen. Somit wurde erkannt, dass dennoch ein individuelles Steuermittel, nämlich hier die Stellventile V11 und V12, für den Zwischenkühler 3 und den Nachkühler 4 vorteilhaft sind. Darüber kann nämlich gesteuert werden, zu welchem Anteil der Gesamtkühlmittelstrom des Primärkühlkreislaufs durch den Zwischenkühler 3 einerseits und den Nachkühler 4 andererseits strömt. Eine Aufteilung der Kühlung im Bereich zwischen den beiden Verdichterstufen einerseits und unmittelbar nach der zweiten Verdichterstufe andererseits kann somit erreicht werden.

Für die Ausführungsform der Figur 8, und andere Ausführungsformen, ergeben sich folgende Vorteile:
Eine maximale Wärmerückgewinnung, bei ausreichender Wärmeabnahme, und Betrieb ohne Kühlwasser, sind möglich. Es kommt somit in Betracht, dass das sekundäre Kühlsystem 11 nicht genutzt werden muss, aber bereitstehen kann, für den Fall, dass mal weniger Wärme benötigt wird oder der Kompressor eine bessere Kühlung benötigt.

Als eine Anwendung wird hierfür ein angeschlossenes Gebäudeheizsystem vorgeschlagen. Das kann folgende Wirkung haben. Im Winter kann die gesamte Wärme über den Wärmetauscher 10 genutzt werden. Im Sommer hingegen wird weniger Wärme benötigt, aber die Wärme muss trotzdem abgeführt werden. Dies erfolgt dann über den Primär-Sekundär-Wärmetauscher 9, das sekundäre Kühlsystem 11 und das Ventil V10.

Je nach Temperaturanforderung und Alternative kann ca. 10...30 % mehr Abwärmenutzung möglich sein. Eine maximale Abwärmenutzung ist bei einer um ca. 5K... 10K höheren Wassereintrittstemperatur möglich.

Eine sehr hohe Wasseraustrittstemperatur T14 ist möglich, besonders bis etwa ~95°C.

Ausreichende Mantelkühlung und Ölkühlung mit Heizungswasser bei hohem Volumenstrom ist möglich, besonders über das primäre Wassersystem mit den Zu- bzw. Ablauftemperaturen T10 und T14.

Ein ausreichender Taupunkt kann erreicht werden, da der Kühler 7 einen großen Volumenstrom kühlen Heizungswassers bekommt.

Bei Bedarf ist eine geringe Druckluftaustrittstemperatur möglich, da der Kühler 8 kühles Heizungswasser bekommt.

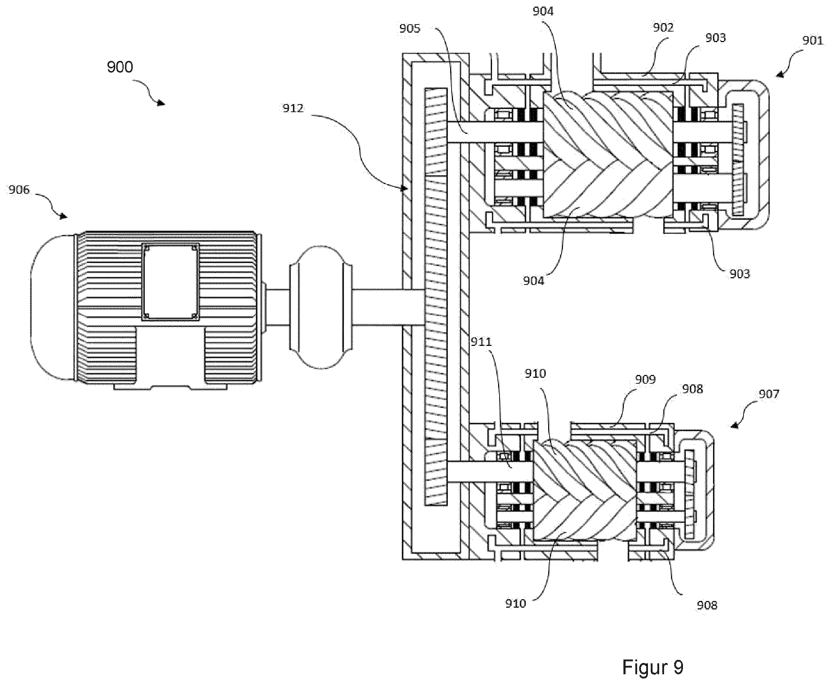

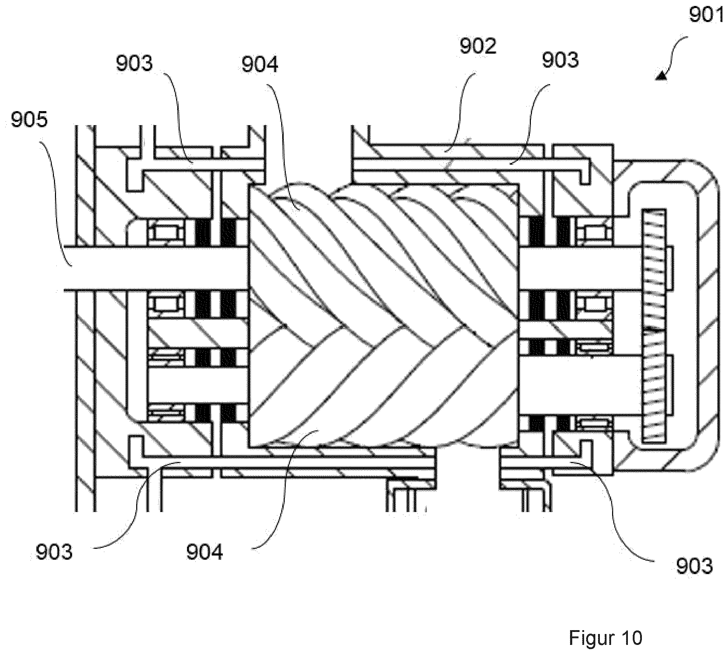

Fig. 9 zeigt eine Kompressoreinrichtung 900 mit einer ersten und einer zweiten Verdichterstufe 901 bzw. 907 in einer schematischen, teilweise geschnittenen Darstellung. Dazu zeigt die Figur 10 eine erste Verdichterstufe 907 in einer vergrößerten Darstellung. Nachfolgend wird auf die Figur 9 Bezug genommen, soweit die erste Verdichterstufe erklärt wird, wird zusätzlich auf Figur 10 Bezug genommen.

Die Figur 9 zeigt somit einen trockenlaufenden Schraubenverdichter, der im Wesentlichen die Kompressoreinrichtung 900 bildet. Die erste Verdichterstufe 901 führt somit im Betrieb eine Kompression einer ersten Stufe durch. Dazu weist die erste Verdichterstufe 901 ein Gehäuse 902 auf, sowie Kühlmittelkanäle 903 einer Mantelkühlung, die besonders in Figur 10 deutlicher dargestellt sind.

Zum Verdichten des Druckgases, besonders der Druckluft, sind Verdichterschrauben 904 vorgesehen, die zum Verdichten ineinandergreifen. Sie werden über eine Antriebswelle 905 der entsprechenden Verdichterstufe angetrieben. Die zweite Verdichterstufe 907, die das in der ersten Verdichterstufe komprimierte Gas, insbesondere komprimierte Luft, weiter komprimiert, weist ein Gehäuse 909 mit Kühlmittelkanälen 908 und Verdichterschrauben 910 auf, die über eine Antriebswelle 911 angetrieben werden.

Beide Antriebswellen 905 und 911 werden über einen gemeinsamen Antriebsmotor 906 angetrieben, und dazu ist ein Getriebe 912 vorgesehen, das die Antriebsleistung vom Antriebsmotor auf die beiden Antriebswellen 905 und 911 verteilt, um dadurch die Verdichterschrauben 904 und 910 anzutreiben.

Über die Mantelkühlung, die mit Hilfe der Kühlmittelkanäle 903 und 908 realisiert wird, können die beiden Verdichterstufen 901 und 907 gekühlt werden. Dazu fließt ein Kühlmedium, insbesondere Kühlwasser, durch diese Kühlmittelkanäle 903 und 908, und das kann zusammen oder individuell gesteuert werden.

Erfindungsgemäß, zumindest gemäß einem Aspekt, sind besonders folgende Aspekte herauszuheben.

Es wird besonders ein mehrstufiger trockenverdichtender Kompressor mit Wasserkühlung vorgeschlagen, der mindestens einen Zwischenkühler, einen Nachkühler, einen Ölkühler und einen Verdichterkühler, besonders Mantelkühler, zur Kühlung mindestens eines Verdichterstufengehäuses, der auch als Gehäusekühler bezeichnet werden kann, umfasst. Der Zwischenkühler und Nachkühler bilden jeweils einen Druckgaskühler.

Es wird vorgeschlagen, dass bei jeder dieser Kühlvorrichtungen, also bei jedem dieser Kühler, Wasserdurchfluss zur Wärmeabfuhr separat über ein eigenes Regelorgan, insbesondere Regelventil oder regalbare Pumpe, geregelt werden kann. Das Regelorgan kann auch als Steuermittel bezeichnet werden.

Folgende Aspekte können zusätzlich vorgesehen sein. Mindestens zwei Druckluftnachkühler nach einer zweiten Verdichterstufe können vorgesehen sein. Mindestens ein Drucklufttrockner mit einem nachgelagerten Druckluftkühler für die getrocknete Druckluft kann vorgesehen sein. Eine Vorrichtung zur Kühlung des mindestens einen Verdichtergehäuses ist als Mantelkühlung bzw. Mantelkühler ausgebildet, und/oder es ist ein Wärmetauscher für eine solche Mantelkühlung vorgesehen.

Ein Regelorgan bzw. Steuermittel ist zur Regelung von Wasservolumenströmen als Regelung von Kühlmittelströmen je Wärmetauscher als separates Stellventil für jeden einzelnen Wasserströmungsweg vorgesehen. Besonders wird eine Steuerung des Kühlmittels für jeden Kühler vorgesehen. Jeder Kühler kann jeweils einen Versorgungsstrang aufweisen, durch den er mit Kühlmittel versorgt wird. Das beinhaltet jeweils das Zu- und Abführen des Kühlmittels. Jeder Versorgungsstrang kann einen Zulauf und einen Ablauf aufweisen. Vorzugsweise ist für jeden Kühler jeweils in seinem Versorgungsstrang ein Steuermittel vorgesehen. Das kann jeweils im Zulauf oder im Ablauf sein. Ein, insbesondere jeder, Versorgungsstrang jeweils eines Kühlers kann parallel zu den Versorgungssträngen einiger oder aller übriger Kühler angeordnet sein.

Ein Steuermittel bzw. Regelorgan zur Regelung der Wasservolumenströme je Wärmetauscher kann als separate, regelbare Pumpe für jeden parallelen Strang, also insbesondere jeden Versorgungsstrang ausgeführt sein. Ein Steuermittel bzw. Regelorgan kann zur Regelung jeweils einer Vorrichtung, insbesondere eines Kühlers mindestens eines Verdichtergehäuses vorgesehen sein. Eine Parallelschaltung von Ölkühler und mindestens einer dieser Vorrichtungen, insbesondere Kühler zur Kühlung des mindestens einen Verdichtergehäuses, wird vorgeschlagen.

Es wird vorgeschlagen, dass die Steuermittel bzw. Regelorgane durch eine zentrale bzw. gemeinsame Steuerungseinheit geregelt bzw. koordiniert werden.

Es können verschiedene Verschaltungsvarianten für die Mantelkühlung vorgesehen sein. Eine davon ist eine Parallelschaltung von Ölkühler und Mantelkühlung bzw. Mantelkühler. Eine andere ist, einen Ölkühler und einen Wärmetauscher der Mantelkühlung vorzusehen, sodass eine getrennte bzw. unabhängige Regelung von Öltemperatur und Mantelkühlungstemperatur erreichbar ist.

Vorzugsweise ist ein Schraubenverdichter als Kompressor vorgesehen. Als Kühlmittel kann besonders Wasser oder eine Wasser-Glykol-Mischung verwendet werden.

Für das Ansteuern eines Steuermittels oder Regelorgans zur Regelung einer Mantelkühlungstemperatur, wenn ein Wärmetauscher zur Trennung, was auch als Systemtrennung bezeichnet werden kann, vorhanden ist, insbesondere zur Trennung des Mantelkühlkreislaufs von einem Primärkühlkreislauf, können besonders zwei Varianten vorgesehen sein. Gemäß einer ersten Variante erfolgt ein Steuern oder Regeln direkt, indem ein Kühlmittelstrom, insbesondere Wasserdurchfluss durch die Mantelkühlung gesteuert bzw. geregelt wird. Gemäß einer zweiten Variante erfolgt ein Steuern oder Regeln indirekt, indem ein Steuern oder Regeln eines Kühlmittelstromes bzw. eines Wasserdurchflusses durch den Wärmetauscher erfolgt, der mit einem Kühlmittel, insbesondere Kühlmittel der Mantelkühlung Wärme tauscht.

Das Steuermittel bzw. Regelorgan kann zur Steuerung bzw. Regelung der Mantelkühlungstemperatur verwendet werden, wenn kein Wärmetauscher zur Systemtrennung vorhanden ist.

Gemäß weiteren Aspekten wird ein trockenverdichtender Kompressor vorgeschlagen, mit flüssigkeitsgekühlten Wärmetauschern, die durch mindestens einen Zwischenkühler, mindestens einen Nachkühler, mindestens einen Ölkühler und mindestens eine Vorrichtung zur Kühlung des mindestens einen Verdichtergehäuses gebildet sind. Dazu sind individuelle Stellventile bzw. Regelventile für die Regelung der Wasservolumenströme für jeden einzelnen Wärmetauscher vorgesehen. Eine Steuerung oder Regelung von Kühlmittelströmen kann zu jeder Ausführungsform als eine Steuerung bzw. Regelung eines Volumenstromes des jeweiligen Kühlmittels ausgeführt sein, insbesondere als Steuerung bzw. Regelung des Wasservolumenstromes, wenn als Kühlmittel Wasser verwendet wird. Die Temperaturen des mindestens einen Zwischenkühlers, des mindestens einen Nachkühlers, des mindestens einen Ölkühlers und der mindestens einen Vorrichtung zur Kühlung des mindestens einen Verdichtergehäuses, die als Gehäusekühler bezeichnet werden kann, werden unabhängig voneinander geregelt. Das erfolgt insbesondere, indem die Durchflussrate des Kühlmittels durch die genannten Kühler, bzw. Vorrichtungen jeweils gesteuert oder reguliert wird.

Eine gemischte Wasseraustrittstemperatur, also eine Austrittstemperatur des Gesamtkühlmittelstroms, die in den Figuren mit T14 bezeichnet ist, wird auf einen gewünschten, insbesondere vorgegebenen Wert geregelt, indem Wasservolumenströme durch parallelgeschaltete Wärmetauscher unabhängig voneinander und auf individuelle, ggf. auf unterschiedliche Temperaturen geregelt werden, sodass sich nach dem Zusammenführen der einzelnen Teilvolumenströme, also der einzelnen Kühlmittelströme der jeweiligen Kühler, die gewünschte Gesamtwasseraustrittstemperatur T14 ergibt. Dazu wird vorgeschlagen, dass Steuermittel, insbesondere Ventile, insbesondere Stellventile, durch eine gemeinsame und/oder zentrale Steuerungseinheit angesteuert bzw. geregelt werden.

Es kann folgende Regelung vorgesehen sein. Der Ölkühler bekommt immer genau die Wassermenge, die zum Erreichen der gewünschten Öltemperatur (z.B. 70°C) erforderlich ist. Der Druckluftnachkühler, insbesondere der Nachkühler bzw. erste Nachkühler, bekommt immer genau die Wassermenge, die erforderlich ist, um die gewünschte maximale Druckluftaustrittstemperatur nicht zu überschreiten, den gewünschten maximalen Drucktaupunkt nicht zu überschreiten und die maximal zulässige Wassertemperatur (z.B. 100°C) nicht zu überschreiten.

Die Wasseraustrittstemperatur aus der Mantelkühlung, also aus dem Gehäusekühler, wird so eingeregelt, dass sie geringer ist als die Wasseraustrittstemperatur aus dem Zwischenkühler.

Gemäße einem ersten Aspekt bekommen der Zwischenkühler und die Mantelkühlung so viel, bzw. wenig Wasser wie erforderlich, um die gewünschte gemischte Wasseraustrittstemperatur zu erreichen.

Gemäß einem zweiten Aspekt bekommt der Zwischenkühler so viel, bzw. wenig Wasser wie erforderlich, um die gewünschte gemischte Wasseraustrittstemperatur T14 zu erreichen.

Es wird vorgeschlagen, die Regelung so durchzuführen, dass die Temperaturdifferenz zwischen Wasser-Einlass und -Auslass der Mantelkühlung ca. halb so groß ist wie die Temperaturdifferenz zwischen Wasser-Einlass und -Auslass des Zwischenkühlers. Der Zahlenwert der halben Temperaturdifferenz hat sich als vorteilhaft erwiesen. Besonders hat er sich als guter Kompromiss erwiesen. Der optimale Zahlenwert des Faktors kann aber auch davon abhängen, welche der Temperaturdifferenzen T13-T10, T15-T10 und T23-T10 in Relation zu T11-T1 0 gesetzt wird.

Weiterhin wird, gemäß jedem Aspekt vorgeschlagen, die gemischte Wasseraustrittstemperatur auf einem vorbestimmten oder vorgebbaren Wert zu halten. Der Wert kann sich abhängig von der Außentemperatur ändern, und dafür kann eine Heizkurve vorgegeben sein.

Folgende Verfahrensschritte können zur Einstellung der Durchflussraten vorgesehen sein. Die Verfahrensschritte können in der genannten Reihenfolge priorisiert sein:
1. Es wird eine Druckluftversorgung sichergestellt, nämlich ein störungsfreier Betrieb.
2. Es wird eine Druckluftqualität sichergestellt, nämlich ein vorgebbarer Drucktaupunkt und eine Druckluft-Temperatur.
3. Die Steuerung bzw. Regelung erfolgt dann so, dass eine gewünschte Wasseraustrittstemperatur T14 erreicht wird.
4. Bei manchen Aspekten ist vorgesehen, dass eine Lieferung der gewünschten Wärmeleistung über das primäre Wassersystem, also einen Primärkühlkreislauf erfolgt, bei dem eine Rückkühlung über ein sekundäres Wassersystem vorgesehen ist, was über ein Stellventil, besonders ein in den Figuren gezeigtes Stellventil V10, erfolgend kann.
5. Die Steuerung erfolgt dann so, dass eine minimale Leistungsaufnahme des Kompressors erreicht wird.

Weiterhin wird gemäß einem Aspekt eine Regelung des Drucktaupunktes vorgeschlagen, sofern ein Drucklufttrockner verwendet wird, und ein Messwert für die Feuchtigkeit verfügbar ist. Hierfür kann der Drucktaupunkt oder die absolute Feuchte oder die relative Feuchte direkt gemessen werden.

Beim Einsatz eines Kältetrockners kann auch die Temperatur an einer kalten Stelle gemessen werden und hieraus direkt auf den Drucktaupunkt geschlossen werden.

Wenn der Drucktaupunkt nach dem Trockner zu hoch wird, dann sieht die Steuerung vor, dass der/die Wärmetauscher vor dem Trockner, also wenigstens einer der dem Trockner vorgelagerten Druckgaskühler, mehr und/oder kälteres Kühlwasser erhält. Insbesondere wird der Kühlmittelstrom durch den wenigstens einen Druckgaskühler erhöht.

Bei Verwendung eines Adsorptionstrockners, der mit Verdichterwärme regeneriert wird, bekommt der Zwischenkühler weniger Wasser, also weniger Kühlmittel, um eine höhere Austrittstemperatur aus dem Kompressor, insbesondere aus einer zweiten Verdichterstufe, zu erreichen, um sie für die Regeneration des Trockners zu nutzen.

Bei der Regelung der Wasserventile werden u.a. folgende gemessene Temperaturen berücksichtigt, wobei sich die Bezugszeichen auf die Figuren beziehen, in denen sie eingezeichnet sind:
- Eine Druckluftaustrittstemperatur T100 aus der Kompressoreinrichtung, die je nach Ausführung eine Druckluftaustrittstemperatur aus dem letzten Wärmetauscher oder aus dem Trockner, und damit die Temperatur, mit der das Druckgas, besonders die Druckluft, zur weiteren Verwendung abgegeben wird, sein kann, wobei für T100 ein Messwert einer der Temperaturstellen T85 oder T52 oder T51 oder T4 genommen werden kann, auch je nachdem, wo die Kompressoreinrichtung endet;
- eine Öltemperatur, insbesondere eine Öleintrittstemperatur im Ölkühler T60,
- eine Öltemperatur stromauf eines Ölkühlers,
- eine Ölaustrittstemperatur aus einer Verdichterstufe,
- Luftaustrittstemperatur aus Nachkühler T51,
- Luftaustrittstemperatur aus Zwischenkühler T31,
- Wasseraustrittstemperatur aus Zwischenkühler T11,
- Wasseraustrittstemperatur aus Nachkühler T12,
- Wasseraustrittstemperatur aus Mantelkühlung bzw. aus einem Wärmetauscher einer Mantelkühlung T13, T15, T23,
- Luft- und Wasseraustrittstemperaturen aus optionalen weiteren Wärmetauschern 7, nämlich die Temperaturen T52 und T25, und Wärmetauscher nach dem Trockner 8, nämlich die Temperaturen T86 und T28;, und
- Luftaustrittstemperatur aus Verdichterstufen T2 und T4.

Gemäß einem Aspekt ist eine Ausführungsform einer Wärmerückgewinnungs vorgesehen. Über einen Wasser-Wasser-Wärmetauscher wird eine Wassereintrittstemperatur T10 für die Wärmetauscher in dem Primärkühlkreislauf über ein Stellventil V10 geregelt. Dadurch wird die Wärmerückgewinnungsleistung eingestellt.

Wenn die Wassereintrittstemperatur T10 geringer ist, verglichen mit einem Durchschnittswert, ist die elektrische Leistungsaufnahme des Kompressors entsprechend etwas geringer und die nutzbare Abwärmeleistung deutlich geringer, aufgrund des geringeren Wasservolumenstroms durch den primären Wasserkreislauf.

Wenn die Temperaturen T9 und T10 gering sind, kann die Abwärmeleistung höher sein. Die Abwärmeleistung wird nur dann deutlich geringer, wenn T10 geringer ist als T9, d.h. wenn Wärme über den Wärmetauscher 9 und das sekundäre Kühlsystem 11 abgeführt wird.

Weitere Aspekte können vorgesehen sein.

Eine Abwärmenutzung kann vorgesehen sein, wobei die gesamte Wärme des Kompressors in das primäre Wassersystem (z.B. Heizungswasser) abgeführt werden kann. Das bedeutet, dass je nach Wärmebedarf und Temperaturprofil die Abwärme von den Wärmetauschern über das primäre Wassersystem abgeführt werden kann. In anderen Ausführungen kann ein Teil der Abwärme über das sekundäre Kühlsystem abgeführt werden.

Ein kleiner Teil der Abwärme wird jedoch auch über die Kühlluft abgegeben. Ein weiterer kleiner Teil der Kompressionswärme kann über die Druckluft abgeführt werden.

Eine Rückkühlung des primären Wassers (z.B. Heizungswasser) kann über den sekundären Kreislauf (z.B. Kühlwasser) vorgesehen sein,
- wenn bauseits, z.B. bei einer angeschlossenen Heizung, oder anderen bauseitig angeschlossenen Elementen, weniger Wärme aus dem Primärkreislauf benötigt wird,
- um die spezifische Leistung zu verbessern und/oder
- wenn einzelne Komponenten im Kompressor eine bessere Kühlung benötigen und eine Eingangstemperatur des versorgenden Primärkühlkreislaufs, die in den Figuren als T9 bezeichnet ist, hierfür zu heiß ist.

Gemäß einem Aspekt wird vorgeschlagen, dass ein vollständiger interner Kreislauf mit Pumpe, Ausdehnungsgefäß, Bypass und optional weiteren Elementen vorgesehen ist. Hiermit kann der Kompressor auch ohne Anschluss an bauseitiges, primäres Wassersystem (z.B. bei Ausfall des Heizungssystems) betrieben werden.

Bei diesem Aspekt wird das Wasser primärseitig nur intern durch die Pumpe 12b und den Bypass 21 umgewälzt. Den Aspekt illustriert beispielhaft die Figur 4.

Ein Aspekt ist in Figur 8 gezeigt, in der ein Bypass V19 als eine Variante vorgesehen sein kann.

Der Aspekt wird vorgeschlagen, wenn Zwischenkühler und Nachkühler in Summe mehr Wasser benötigen als die vorgeschalteten Wärmetauscher. Das kann in einem Extrembeispiel bei einem Kaltstart auftreten, wenn die Stellventile V16, V13, V28, V25 geschlossen sind, aber die Stellventile V11 und V12 geöffnet, insbesondere vollständig geöffnet.

Gemäß einem Aspekt ist eine Regelung der Mantelkühlung für optimale Kühlung vorgesehen. Hierdurch ist eine gute Kühlung erzielbar, da die Mantelkühlung einen großen Einfluss auf die spezifische Leistung, also besonders Leistung/Volumenstrom des Kompressors, hat. Dabei wird vorgeschlagen, dass die Kühlung nicht zu stark eingestellt sein darf, um ein übermäßiges Einlaufen der Verdichterstufen zu verhindern, besonders ein Einlaufen von Rotor- und Gehäusebeschichtungen der Verdichterstufen.

Besonders liegt hier der Gedanke zu Grunde, dass die Kühlung der Verdichterstufen möglichst gut sein sollte, aber auch langfristig möglichst konstant sein sollte. Kurzzeitig gilt vereinfachend je kälter, desto besser, so lange kein Kondenswasser auftritt.

Aber diese niedrige Temperatur muss dann auch dauerhaft gehalten werden. Da dies oft nicht möglich ist, kann es besser sein, im Winter nur mäßig zu kühlen, sodass diese Temperaturen auch im Sommer erreicht werden können.

Wenn die Stufe "zu gut", also zu stark gekühlt wird, dann wird das Gehäuse kleiner und die Beschichtung des Gehäuses und der Rotoren laufen sich weiter ein. Wenn es dauerhaft so bleibt, dann kann das gut sein. Wenn das Gehäuse bzw. die Mantelkühlung jedoch später wieder wärmer und damit größer wird, werden die Spalten größer und der Kompressor spezifisch schlechter.

Als ein Aspekt wird vorgeschlagen, eine Drucklufttemperatur vor Eintritt in eine zweite Verdichtungsstufe zu minimieren. Diese Temperatur ist in Figur 8 an der Temperaturmessstelle T31 zu finden bzw. kann auch als T31 verstanden werden. Dieser Aspekt wird vorgeschlagen, um spezifische Leistung des Kompressors zu minimieren. Der Zwischenkühler, der die teilverdichtete Druckluft an dieser Temperaturmessstelle kühlt, bekommt dafür möglichst viel Wasser. Dazu ist vorgesehen, dass die Kühler 7 und 8 und Ölkühler nur so viel Wasser wie nötig bekommen. Das ist vorgesehen, um Vorwärmung des Kühlmittels vor Eingang in den Zwischenkühler, in Figur 8 an der Messstelle T19, gering zu halten. Der Nachkühler 4 bekommt dabei möglichst wenig Wasser, aber so viel, dass die Temperatur am Ausgang des Nachkühlers 4, in Figur 8 bei Messstelle T12, nicht zu hoch wird. Der Drucktaupunkt und der Sollwert für die optimale Druckluftaustrittstemperatur sollten möglichst erreicht werden.

Gemäß einem Aspekt wird vorgeschlagen, eine Öltemperatur stromauf des Ölkühlers auf einen vorgebbaren Sollwert zu regeln. Hierzu wurde erkannt, dass eine vorgebbare Maximaltemperatur des Öles vor dem Ölkühler, in Figur 7 an der Messstelle T60, relevanter ist für die Standzeit des Öles, der Lager und der Getriebe als eine Einspritztemperatur stromab des Ölkühlers, in Figur 7 an der Messstelle T66. Es wurde erkannt, dass das bei hoher Öl-Erwärmung zu kälterer Einspritztemperatur an der Temperaturmessstelle T66 führt. Dadurch können Lager bei hoher Belastung, bzw. hoher Erwärmung besser gekühlt werden. Dadurch ist es möglich, eine noch ungekühlte, daher hohe Öltemperatur, insbesondere bei T60, konstant zu halten, wobei eine gekühlte, daher tiefe Öltemperatur, insbesondere bei T66, abhängig einer Lagerbelastung, und ggf. anderen Belastungen schwankt.

Folgende Aspekt sind noch zu erwähnen, mit denen sich die Erfindung, zumindest Aspekte davon, vom Stand der Technik abheben, bzw. wurden erfindungsgemäß erkannt.

Die Mantelkühlung muss möglichst gleichmäßig gut gekühlt werden bzw. kühlen. Optimal wäre eine dauerhaft konstant gute Kühlung. In der Praxis schwankt jedoch meist die Wassertemperatur deutlich.

Manche Lösungen aus dem Stand der Technik (s. WO 2022/163079 A1) kühlen die Mantelkühlung daher mit vorgewärmtem Wasser durch eine Reihenschaltung mit dem Ölkühler, um zu vermeiden, dass das Verdichtergehäuse zu stark gekühlt wird und damit zu klein wird, was zum unerwünscht starken Einlaufen der Rotor- und Gehäusebeschichtung der Verdichterstufen führen würde. Die Funktionsweise dieses Einlaufens ist der Patentanmeldung EP 3399191 A1 zu entnehmen.

Andere Lösungen aus dem Stand der Technik kühlen die Mantelkühlung zwar mit kühlem (nicht vorgewärmtem) Wasser, können aber nicht unabhängig regeln. Dies kann zwar bei kaltem Kühlwasser zu sehr guten spezifischen Werten führen, führt aber auch zu einem stärkeren Einlaufen der Rotor- und Gehäusebeschichtung. Dadurch sind dann im späteren (Normal-)Betrieb bei höherer Wassertemperatur die Spalte unnötig groß, wodurch es mehr Rückströmung gibt, was sich negativ auf die spezifische Leistung des Kompressors auswirkt.

Durch die Regelung der Durchflussmenge durch die Mantelkühlung kann durch die Erfindung verhindert werden, dass die Mantelkühlung bei zu geringer Wassertemperatur zu stark gekühlt wird. Somit kann erfindungsgemäß auch mit nicht vorgewärmtem Wasser eine gleichmäßigere und bessere Kühlung erreicht werden, was sich dauerhaft positiv auf die spezifische Leistung des Kompressors auswirkt.

Erfindungsgemäß wird besonders die Mantelkühlung jetzt mit kühlem Wasser, d.h. nicht vorgewärmtem Wasser gekühlt und es wird der Durchfluss durch die Mantelkühlung gerege-t - und damit die Mantelkühlungstemperatur T13, bzw. die Gehäusetemperatur und Gehäusegröße - unabhängig von anderen Wärmetauschern.

Es wird erfindungsgemäß besonders vorgeschlagen, dichtschließende Ventile zu verwenden. Somit kann die Strömung durch die einzelnen parallelen Stränge auch komplett unterbunden werden. Dies ist z.B. im Stillstand der Fall, aber auch bei einem Kaltstart. Hier werden der Zwischenkühler und der Nachkühler schon durchströmt, während der Ölkühler und die Mantelkühlung zu Beginn einige Zeit gar kein Wasser bekommen, bis die jeweiligen Betriebstemperaturen erreicht sind.

Die separate Regelung der Mantelkühlung ist somit ein vorgeschlagener Aspekt.

Erfindungsgemäße Aspekte sind zudem Folgende.

Es wird eine von den übrigen Kühlungen separate Steuerung oder Regelung einer Gehäusekühlung, insbesondere der Mantelkühlung vorgeschlagen, bei der die Durchflussmenge des Kühlmittels und/oder Temperatur des Kühlmittels gesteuert wird.

Zudem wird eine Steuerung bzw. Regelung einer Austrittstemperatur eines gemeinsamen Kühlmittelstromes vorgeschlagen, insbesondere eines Primärkühlkreislaufs der Kompressoreinrichtung. Diese Temperatur kann auch als gemischte Austrittstemperatur bezeichnet werden und ist in den Figuren bei der Temperaturmessstelle T14 eingezeichnet. Es wird dazu vorgeschlagen, die genannte Austrittstemperatur durch mehrere Steuermittel, insbesondere parallele Regelorgane durchzuführen, die einzeln auf unterschiedliche Temperaturen regeln.

Es wurde erkannt und wird erfindungsgemäß gemäß einem Aspekt vorgeschlagen, abhängig von einem Verhältnis von einem aktuellen Strompreis zu einem aktuellen Wärmepreis einerseits und einem Unterschied zwischen primären Wärmerückgewinnungs-Temperaturen zu sekundären Kühlwassertemperaturen, die Mantelkühlung mit dem primären, wärmeren Wärmerückgewinnungs-Wasser oder dem sekundären, kühleren Kühlwasser zu betreiben.

Als Strompreis kann ein Preis je kWh verwendet werden, also bspw. in ct/kWh. Der genannte Wärmepreis kann von einem Gaspreis zzgl. weiterer Betriebskosten und Wirkungsgrade hängen, oder von einem anderen Preis einer Primärenergie.

Hier liegt der Gedanke zu Grunde, dass im Sommer in Betracht kommt, dass andere, günstigere Wärmequellen, besonders andere Primärenergieträger zur Verfügung stehen.

Dabei ist zu berücksichtigen, dass für Abwärme vom Kompressor auch Kosten angesetzt werden können. Je höher das Temperaturniveau wird, um so teurer wird die Abwärme des Kompressors, da gleichzeitig die spezifische Leistung [kwh/m³] schlechter wird.

Es wurde aber erkannt, dass die Abwärme des Kompressors meist als wesentlich günstiger als die Wärmeerzeugung über Gasbrenner angenommen werden kann.

Insbesondere, wenn ein Wärmebedarf geringer ist, als das maximal mögliche Wärmeangebot der Kompressoreinrichtung, wird vorgeschlagen, das Wärmeangebot zu optimieren.

Eine derartige Optimierung kann durch Reduzierung derTemperaturT10 erfolgen, um hiermit die Temperatur T31 zu reduzieren. Je nach zurückliegendem Verlauf, bzw. Spaltmaß der Verdichter und Temperaturniveau, kann auch eine Reduzierung der Temperatur T13, bzw. der Temperatur T15 sinnvoll sein. Beides wird hier als mögliche Aspekte vorgeschlagen.

Beide Maßnahmen können die Leistungsaufnahme reduzieren und gleichzeitig den Massestrom des Druckgases erhöhen, sodass die spezifische Leistung sinkt.

Ein Aspekt der Erfindung ist eine Regelung der Mantelkühlung. Diese gibt es insbesondere bei trockenverdichtenden Schraubenkompressoren. Bei öleingespritzten oder wassereingespritzten Kompressoren ist eine solche Regelung ggf. nicht oder weniger wichtig. Daher wird besonders die Verwendung von trockenverdichtenden Schraubenkompressoren vorgeschlagen.

Turbo-, Scroll-, Drehzahn-, Wälz- und Hubkolben könnten verwendet werden, und sind Beispiele für trockenverdichtende Kompressoren.

Es wurde besonders erkannt, dass bei trockenverdichtenden Schraubenkompressoren die Mantelkühlung eine besonders große Bedeutung hat. Die Erfindung, zumindest Aspekte davon, ist daher besonders zur Verwendung mit trockenverdichtenden Schraubenkompressoren vorgesehen.

## Patentansprüche

1. Kompressoreinrichtung mit
- einem Kompressor zum Verdichten eines Gases zum Erzeugen von Druckgas, insbesondere Druckluft, und
- einer Kühleinrichtung und die Kühleinrichtung umfasst
- einen Ölkühler zum Kühlen von durch den Kompressor erwärmten Öl,
- wenigstens einen Druckgaskühler zum Kühlen des ganz oder teilweise zum Druckgas verdichteten Gases, und
- wenigstens einen Gehäusekühler zum Kühlen eines Gehäuses oder eines Teils des Gehäuses des Kompressors, wobei
- der Ölkühler, der wenigstens eine Druckgaskühler und der wenigstens eine Gehäusekühler jeweils dazu vorbereitet sind, das Kühlen durch einen Kühlmittelstrom aus einem flüssigen Kühlmittel, insbesondere Wasser, zu erreichen und wobei
- für den Kühlmittelstrom des Ölkühlers, den Kühlmittelstrom wenigstens eines des wenigstens einen Druckgaskühlers und den Kühlmittelstrom wenigstens eines des wenigstens einen Gehäusekühlers jeweils
ein individuelles, ansteuerbares Steuermittel vorgesehen ist, um jeden dieser Kühlmittelströme individuell zu steuern, sodass eine Kühlleistung jeweils für den Ölkühler, den wenigstens einen des wenigstens einen Druckgaskühlers und den wenigstens einen des wenigstens einen Gehäusekühlers individuell steuerbar ist.

2. Kompressoreinrichtung nach Anspruch 1, **dadurch gekennzeichnet, dass**
- der Ölkühler,
- der wenigstens eine Druckgaskühler, zumindest einer davon, und
- der wenigstens eine Gehäusekühler, zumindest einer davon,
- an einen gemeinsamen Kühlmittelkreislauf, insbesondere Primärkühlkreislauf angeschlossen sind, insbesondere in einer Parallelschaltung.

3. Kompressoreinrichtung nach Anspruch 1 oder 2, **dadurch gekennzeichnet, dass**
- der Kompressor mehrere Verdichtungsstufen aufweist und
- der wenigstens eine Druckgaskühler einen Zwischenkühler und einen Nachkühler aufweist, wobei
- der Zwischenkühler zwischen einer ersten und zweiten Verdichtungsstufe teilweise zum Druckgas verdichtetes Gas kühlt und
- der Nachkühler Druckgas am Ausgang des Kompressors nach Durchlauf durch die mehreren Verdichtungsstufen kühlt, und/oder
- dass der Zwischenkühler und/oder der Nachkühler jeweils ein individuelles ansteuerbares Steuermittel aufweisen.

4. Kompressoreinrichtung nach einem der vorstehenden Ansprüche, **dadurch gekennzeichnet, dass**
- die Steuermittel jeweils ein steuerbares Ventil und/oder eine steuerbare Pumpe aufweisen.

5. Kompressoreinrichtung nach einem der vorstehenden Ansprüche, **dadurch gekennzeichnet, dass** der wenigstens eine Gehäusekühler
- wenigstens einen Mantelkühler aufweist, insbesondere mit
- zwei in Reihe geschalteten Teilmantelkühlern, zum Kühlen jeweils einer Verdichterstufe, die dazu vorbereitet sind, zum Kühlen denselben Kühlstrom zu verwenden und den Kühlstrom mit demselben Steuermittel zu steuern.

6. Kompressoreinrichtung nach einem der vorstehenden Ansprüche, **dadurch gekennzeichnet, dass**
- eine gemeinsame Steuerungseinrichtung zum koordinierten Steuern der Kühlmittelströme vorgesehen ist, insbesondere, dass
- die gemeinsame Steuerungseinrichtung zum Steuern der Steuermittel vorbereitet und mit den Steuermitteln verbunden ist.

7. Kompressoreinrichtung nach einem der vorstehenden Ansprüche, **dadurch gekennzeichnet, dass**
- der Kompressor ein trockenverdichtender Kompressor und/oder
- ein Schraubenverdichter ist, der dazu ausgebildet ist, das Gas durch eine Bewegung zweier ineinandergreifender Schrauben zu verdichten.

8. Kompressoreinrichtung nach einem der vorstehenden Ansprüche, **dadurch gekennzeichnet, dass**
- wenigstens ein weiterer oder zwei weitere Druckgaskühler vorgesehen ist/sind, die bezogen auf eine Strömungsrichtung des Druckgases hinter dem Kompressor angeordnet sind, um das Druckgas dort weiter zu kühlen, wobei
- der wenigstens eine weitere bzw. die zwei weiteren Druckgaskühler
- jeweils einen Kühlmittelstrom verwenden, der jeweils durch ein eigenes individuelles Steuermittel gesteuert wird, und
- an einen selben bzw. denselben Primärkühlkreislauf wie der Ölkühler, der wenigstens eine Druckgaskühler und/oder der wenigstens eine Gehäusekühler angeschlossen sind, insbesondere in einer Parallelschaltung, und/oder
- an einen zweiten Mediumkühlkreislauf als Sekundärkühlkreislauf angeschlossen sind, der separat arbeitet oder mit dem Primärkühlkreislauf gekoppelt ist, insbesondere über einen Wärmetauscher.

9. Kompressoreinrichtung nach einem der vorstehenden Ansprüche, **dadurch gekennzeichnet, dass**
- der Ölkühler, der wenigstens eine Druckgaskühler und/oder der wenigstens eine Gehäusekühler, jeweils
- einen Wärmetauscher aufweisen oder als Wärmetauscher ausgebildet sind, und dazu vorbereitet sind, dass der jeweilige Kühlmittelstrom durch das jeweilige Steuermittel als Kühlstrom durch den jeweiligen Wärmetauscher gesteuert wird.

10. Kompressoreinrichtung nach einem der vorstehenden Ansprüche, **dadurch gekennzeichnet, dass**
- die Kompressoreinrichtung, insbesondere die Kühleinrichtung dazu vorbereitet ist, Kühlmittelströme individuell jeweils in Abhängigkeit von einer Temperatur zu steuern, insbesondere
- erfolgt die Steuerung in Abhängigkeit von wenigstens einer, insbesondere mit einer Sensorik gemessenen, Temperatur aus der Liste aufweisend
- eine Öltemperatur, insbesondere des durch den Kompressor erwärmten Öls,
- eine Druckgas-Temperatur,
- eine Manteltemperatur eines Kühlmittels, das einen Gehäusemantel des Kompressors durchströmt,
- eine Temperatur des Kühlmittels,
- eine Öleintrittstemperatur als Temperatur des in den Ölkühler eintretenden Öls
- eine Nachkühler-Gasaustrittstemperatur als Temperatur des aus einem bzw. dem Nachkühler austretenden Druckgases,
- eine Zwischenkühler-Gasaustrittstemperatur als Temperatur des aus einem bzw. dem Zwischenkühler austretenden Druckgases,
- eine Zwischenkühler-Kühlmittelaustrittstemperatur als Temperatur des aus dem Zwischenkühler austretenden Kühlmittels
- eine Nachkühler-Kühlmittelaustrittstemperatur als Temperatur des aus dem Nachkühler austretenden Kühlmittels,
- eine Mantelkühler-Kühlmittelaustrittstemperatur als Temperatur des aus einem bzw. dem Mantelkühler austretenden Kühlmittels,
- jeweils eine Gas- oder Kühlmittelaustrittstemperatur als Temperatur eines aus wenigstens einem Wärmetauscher austretenden Druckgases oder austretenden Kühlmittel,
- eine Kompressor-Gasaustrittstemperatur als Temperatur eines aus einer Verdichterstufe des Kompressors und/oder dem Kompressor und/oder aus der Kompressoreinrichtung austretenden Druckgases
und
- eine Kühlkreislauf-Kühlmittelaustrittstemperatur als eine Temperatur des Kühlmittels an einem Austritt des Kühlmittels aus einem bzw. dem Primär- und/oder Sekundärkühlkreislauf, und/oder dass
- die Kompressoreinrichtung dazu vorbereitet ist, dass wenigstens ein Kühlmittelstrom in Abhängigkeit von einem, insbesondere mit einer Sensorik gemessenen, Drucktaupunkt des Druckgases gesteuert wird.

11. Kompressoreinrichtung nach einem der vorstehenden Ansprüche, **dadurch gekennzeichnet, dass**
- die Kompressoreinrichtung, insbesondere die Kühleinrichtung dazu vorbereitet ist, dass Kühlmittelströme so gesteuert werden, dass
- eine bzw. die Gesamtkühlmittelaustrittstemperatur, als Temperatur des aus einem bzw. dem Primär- und/oder Sekundärkühlkreislauf austretenden Kühlmittels, auf eine vorgebbare Sollaustrittstemperatur geregelt wird.

12. Kompressoreinrichtung nach einem der vorstehenden Ansprüche, **dadurch gekennzeichnet, dass**
die Kompressoreinrichtung, insbesondere die Kühleinrichtung dazu vorbereitet ist, dass
- der Kühlmittelstrom des Ölkühlers mittels des betreffenden Steuermittels so gesteuert wird, dass eine vorgegebene Öltemperatur ausgeregelt wird, und/oder
- der Kühlmittelstrom eines des wenigstens einen Druckgaskühlers, insbesondere eines bzw. des Nachkühlers, mittels des betreffenden Steuermittels so gesteuert wird, dass eine vorgegebene Druckgasaustrittstemperatur nicht überschritten und/oder nicht unterschritten wird, und/oder
- der Kühlmittelstrom eines des wenigstens einen Gehäusekühlers, insbesondere eines bzw. des Mantelkühlers, so gesteuert wird, dass eine Kühlmittelaustrittstemperatur dieses Kühlmittels geringer ist als eine Kühlmittelaustrittstemperatur eines des wenigstens einen Druckgaskühlers, insbesondere eines bzw. des Zwischenkühlers, und/oder
- der Kühlmittelstrom eines des wenigstens einen Gehäusekühlers, insbesondere des Mantelkühlers, so gesteuert wird, dass eine Differenz zwischen Kühlmittelaustrittstemperatur bei Austritt des Kühlmittels aus dem Gehäusekühler, zu einer Kühlmitteleintrittstemperatur bei Eintritt dieses Kühlmittels in den Gehäusekühler, dem Betrage nach
- unter einem vorbestimmbaren ersten Wert, und/oder
- über einem vorbestimmbaren zweiten Wert, und/oder
- zwischen einem vorbestimmbaren dritten und vierten Wert liegt.

13. Verfahren zum Betreiben einer Kompressoreinrichtung, und die Kompressoreinrichtung umfasst
- einen Kompressor zum Verdichten eines Gases zum Erzeugen von Druckgas, insbesondere Druckluft, und
- eine Kühleinrichtung, und die Kühleinrichtung umfasst
- einen Ölkühler zum Kühlen von durch den Kompressor erwärmten Öls,
- wenigstens einen Druckgaskühler zum Kühlen des ganz oder teilweise zum Druckgas verdichteten Gases, und
- wenigstens einen Gehäusekühler zum Kühlen eines Gehäuses oder eines Teils des Gehäuses des Kompressors, wobei
- der Ölkühler, der wenigstens eine Druckgaskühler und der wenigstens eine Gehäusekühler das Kühlen jeweils durch einen Kühlmittelstrom aus einem flüssigen Kühlmittel, insbesondere Wasser, erreichen und wobei
- jeder Kühlmittelstrom mit einem individuellen, ansteuerbaren Steuermittel so individuell gesteuert wird, dass eine Kühlleistung jeweils für den Ölkühler, den wenigstens einen Druckgaskühler und den wenigstens einen Gehäusekühler individuell gesteuert wird.

14. Verfahren zum Betreiben einer Kompressoreinrichtung nach Anspruch 13, **dadurch gekennzeichnet, dass** eine Kompressoreinrichtung nach einem der Ansprüche 1 bis 12 verwendet wird.
